(19) Europäisches Patentamt
European Patent Office
Office européen des brevets

(11) **EP 4 572 476 A1**

(12) **EUROPEAN PATENT APPLICATION**
published in accordance with Art. 153(4) EPC

(43) Date of publication:
**18.06.2025 Bulletin 2025/25**

(21) Application number: **23870707.9**

(22) Date of filing: **25.09.2023**

(51) International Patent Classification (IPC):
**H04W 72/04** (2023.01)    **H04L 5/00** (2006.01)

(52) Cooperative Patent Classification (CPC):
**H04L 1/1812; H04L 5/00; H04W 72/04;
H04W 72/0446; H04W 72/0453**

(86) International application number:
**PCT/CN2023/121081**

(87) International publication number:
**WO 2024/067476 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211216324**

(71) Applicant: **Huawei Technologies Co., Ltd.
Shenzhen, Guangdong 518129 (CN)**

(72) Inventors:
• **YI, Feng**
  **Shenzhen, Guangdong 518129 (CN)**
• **SU, Hongjia**
  **Shenzhen, Guangdong 518129 (CN)**
• **LU, Lei**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND DEVICE, COMPUTER-READABLE STORAGE MEDIUM,
AND PROGRAM PRODUCT**

(57)    Disclosed embodiments provide a communication method and apparatus, a computer-readable storage medium, and a product. In the method, a first terminal apparatus determines a common feedback resource, receives first data from a second terminal apparatus, and determines a first feedback resource based on a first time-frequency resource used to receive the first data, where the first feedback resource belongs to the common feedback resource; and the first terminal apparatus sends a first signal on the first feedback resource. In this way, embodiments of this disclosure can ensure that a channel occupancy time is not lost, and a common physical sidelink feedback channel meets a minimum occupied channel bandwidth requirement for a 60 kHz subcarrier spacing configuration, and further resolves a problem of mapping relationship interruption caused because a physical sidelink shared channel and a physical sidelink feedback channel cross a channel occupancy time.

```
┌─────────────────────────────────────────┐
│   Determine a common feedback resource    │~ 2210
└─────────────────────────────────────────┘
                    │
                    ▼
┌─────────────────────────────────────────┐
│ Receive first data from a second terminal │~ 2220
│   apparatus on a first time-frequency      │
│              resource                      │
└─────────────────────────────────────────┘
                    │
                    ▼
┌─────────────────────────────────────────┐
│ Determine a first feedback resource        │~ 2230
│ corresponding to the first time-frequency  │
│ resource, where the first feedback         │
│ resource belongs to the common feedback    │
│ resource                                   │
└─────────────────────────────────────────┘
                    │
                    ▼
┌─────────────────────────────────────────┐
│ Send a first signal on the first feedback  │~ 2240
│              resource                      │
└─────────────────────────────────────────┘
```

FIG. 22

**Description**

This disclosure claims priority to Chinese Patent Application No. 202211216324.X, filed with the China National Intellectual Property Administration on September 30, 2022 and entitled "COMMUNICATION METHOD AND APPARATUS, COMPUTER-READABLE STORAGE MEDIUM, AND PROGRAM PRODUCT", which is incorporated herein by reference in its entirety.

**TECHNICAL FIELD**

This disclosure generally relates to the telecommunications field, and more specifically, to a communication method and apparatus, a computer-readable storage medium, and a computer program product.

**BACKGROUND**

Wireless communication technologies have rapidly developed in the past decades, and have successively experienced a 1st-generation wireless communication system based on an analog communication system, 2G wireless communication systems represented by global system for mobile communications (Global System for Mobile Communications, GSM), 3G wireless communication systems represented by wideband code division multiple access (Wideband Code Division Multiple Access, WCDMA), and long term evolution (Long Term Evolution, LTE) 4G wireless communication systems that have been widely put into commercial use all over the world and have achieved great success. Services supported by the wireless communication systems have also evolved from voice and SMS messages to wireless high-speed data communication. In addition, a quantity of wireless connections worldwide is continuously increasing at a high speed, and various new wireless service types such as the internet of things and self-driving are also emerging massively. All of these pose a higher requirement on a next generation wireless communication system, namely, a 5G system.

With more scenarios requiring communication, a device-to-device (Device-to-Device, D2D) technology has developed rapidly in recent years because of an advantage that direct communication can be performed without network infrastructure. Application of the D2D technology can ease load of a cellular network, reduce battery power consumption of user equipment, improve a data rate, and well meet a requirement of a proximity service. In a wireless communication network defined in 3GPP, an air interface (air interface) for direct communication between users is PC5, and therefore the direct communication is also referred to as PC5 communication. From a perspective of link, a link for direct communication between users is defined as a sidelink (sidelink, SL for short), and therefore the direct communication may also be referred to as sidelink communication, which corresponds to an uplink (uplink) and a downlink (downlink) in a current communication system.

**SUMMARY**

This application provides a communication method and apparatus, a communication apparatus, a computer-readable storage medium, and a computer program product, to ensure that a channel occupancy time (COT) is not lost, and a common PSFCH (physical sidelink feedback channel) meets a minimum occupied channel bandwidth requirement for a 60 kHz subcarrier spacing configuration, and further resolve a problem of mapping relationship interruption caused because a PSSCH and a PSFCH (physical sidelink shared channel and physical sidelink feedback channel) cross a COT.

According to a first aspect, a communication method is provided. The method may be performed by a first terminal apparatus, or a chip used in the first terminal apparatus. The following uses an example in which the method is performed by a first terminal apparatus for description. In the method, a first terminal apparatus determines a common feedback resource, receives first data from a second terminal apparatus on a first time-frequency resource, and determines a first feedback resource corresponding to the first time-frequency resource, where the first feedback resource belongs to the common feedback resource; and the first terminal apparatus sends a first signal on the first feedback resource. In this way, it is ensured that a channel occupancy time (COT) is not lost.

In some implementations, when the first data corresponds to a unicast type, the first terminal apparatus sends feedback information on a second feedback resource corresponding to the first time-frequency resource, where the feedback information is an acknowledgment or a negative acknowledgment corresponding to the first data, and the second feedback resource does not belong to the common feedback resource. In this way, it is ensured that a channel occupancy time (COT) is not lost in a case of a unicast service type.

In some implementations, when the first data corresponds to a second multicast type, the first terminal apparatus sends feedback information on a second feedback resource corresponding to the first time-frequency resource, where the feedback information is an acknowledgment or a negative acknowledgment for the first data, and the second feedback resource does not belong to the common feedback resource. In this way, it is ensured that a channel occupancy time (COT) is not lost in a case of a second multicast service type.

In some implementations, when the first data corresponds to a first multicast type, and hybrid automatic repeat request confirmation information corresponding to the first data is a negative acknowledgment, the first terminal apparatus sends feedback information on a second feedback resource corresponding to the first time-frequency resource, where the feedback information is a negative acknowledgment for the first data. In this way, it is ensured that a channel occupancy time (COT) is not lost in a case of a second multicast service type.

In some implementations, the first signal is the feedback information or another signal other than the feedback information. Therefore, in a service scenario in which feedback information does not need to be sent, sending a signal that is not limited to the feedback information can ensure that a channel occupancy time (COT) is not lost.

In some implementations, the common feedback resource is used by the first terminal apparatus and another terminal apparatus other than the first terminal apparatus to send a signal. The common feedback resource is provided for a terminal apparatus to send a signal, to avoid a lost channel occupancy time due to absence of feedback in a PSFCH slot.

In some implementations, a resource block in the common feedback resource is related to a first bitmap. Therefore, a resource block used to send the feedback information may be indicated by using a bit value in the bitmap, to meet an OCB regulation requirement.

In some implementations, a bit whose bit value is 1 in the first bitmap corresponds to a resource block in the common feedback resource. In this manner, when a common interlace (common interlace) structure fails to be supported for, for example, a 60 kHz subcarrier spacing, a bitmap (bitmap) may be used to indicate interlaced resource blocks, to meet the OCB regulation requirement, and ensure integrity of a common PSFCH resource for various SCS configurations.

In some implementations, a quantity of bits that are indicated in the first bitmap and that are used to send the feedback information is greater than a preset value, to better meet the OCB regulation requirement.

In some implementations, the first feedback resource and the first time-frequency resource belong to a same resource block set, and/or the first feedback resource and the second feedback resource belong to a same resource block set.

According to a second aspect, a communication method is provided. The method may be performed by a first terminal apparatus, or a chip used in the first terminal apparatus. The following uses an example in which the method is performed by a first terminal apparatus for description. In the method, a first terminal apparatus receives first data from a second terminal apparatus; the first terminal apparatus determines a physical sidelink feedback channel PSFCH resource associated with the first data; and if the PSFCH resource belongs to a first channel occupancy time COT in time domain, the first terminal apparatus sends feedback information corresponding to the first data to the second terminal apparatus on the PSFCH resource, where the first COT is initiated (initiate) by the first terminal apparatus; or if the PSFCH resource does not belong to the first COT in time domain, the first terminal apparatus sends the feedback information of the first data in a second COT or a third COT, where the second COT is a COT initiated by the second terminal apparatus, and the third COT is a COT initiated by the first terminal apparatus. A problem that a one-to-one mapping relationship between a PSSCH and a PSFCH feedback resource corresponding to the PSSCH is interrupted due to cross-COT PSSCH-PSFCH is resolved.

In some implementations, the first terminal apparatus receives indication information sent by the second terminal apparatus in the second COT, where the indication information indicates the first terminal apparatus to send the feedback information on a second time-frequency resource in a time-frequency resource set in the second COT. Therefore, the second terminal apparatus indicates, to the first terminal apparatus, a time-frequency resource position for dynamic feedback.

In some implementations, the time-frequency resource set includes M resource blocks. The M resource blocks are determined based on a second bitmap, and/or a first frequency domain offset value, and/or a second frequency domain offset value. The second bitmap is configured by a network side, preconfigured, or specified according to a protocol. The time-frequency resource set includes a resource corresponding to a bit whose bit value is 1 in the second bitmap and that corresponds to the PSFCH resource. Therefore, it is ensured that dynamic feedback can still be performed for a PSSCH and a cross-COT PSFCH corresponding to the PSSCH.

In some implementations, a frequency domain resource position of the second time-frequency resource is determined based on an order, indicated in the indication information, of the first terminal apparatus in feeding back corresponding feedback information; or a time domain resource position of the second time-frequency resource is determined based on a position of a feedback time unit and/or a time offset that are/is indicated in the indication information.

In some implementations, the order of the first terminal apparatus in feeding back the corresponding feedback information is determined based on one or more represented by an indication field in the indication information, a hybrid automatic repeat request process identifier associated with a physical sidelink shared channel PSSCH, a new data indicator associated with the PSSCH, source device information associated with the PSSCH, destination device information associated with the PSSCH, or group identifier information associated with the PSSCH. In this way, an order of feeding back information can be explicitly or implicitly indicated, and an indication manner is flexible.

In some implementations, when the first data corresponds to a second multicast type, a frequency domain resource position corresponding to the first terminal apparatus is related to a first identifier that is preconfigured for each terminal apparatus and that is used for transmission of the PSSCH, or is determined based on a combination of the first identifier and a source address identifier in control information. In this way, a terminal device in a group can be uniquely distinguished, and no conflict occurs.

In some implementations, the frequency domain resource position is determined based on a bit value that is indicated in the indication information and that is used to send the feedback information across feedback time units. A PSFCH resource conflict between (semi-)static feedback in a COT and dynamic feedback across COTs can be avoided.

In some implementations, the feedback information sent in the third COT is in sidelink control information, a media access control control element, or a physical sidelink shared channel PSSCH. Therefore, a feedback manner in which dynamic feedback is explicitly performed via the second terminal apparatus is provided.

In some implementations, for the feedback information sent in the third COT, a frequency domain position (for example, a start position) of the feedback information is indicated by sidelink control information. A form of the feedback information may be a HARQ-ACK codebook. The feedback form is different from a sequence feedback manner in the R16/R17 design. Therefore, another feedback manner in which dynamic feedback is explicitly performed via the second terminal apparatus is provided, implementing a new slot structure.

In some implementations, the feedback information sent by the first terminal apparatus in the third COT includes: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

According to a third aspect, a communication method is provided. For beneficial effects, refer to descriptions of the second aspect. Details are not described herein again. The method may be performed by a second terminal apparatus, or a chip used in the second terminal apparatus. The following uses an example in which the method is performed by a second terminal apparatus for description. In the method, a second terminal apparatus sends first data to a first terminal apparatus; the second terminal apparatus determines a physical sidelink feedback channel PSFCH resource associated with the first data; and if the PSFCH resource belongs to a first channel occupancy time COT in time domain, the second terminal apparatus receives feedback information corresponding to the first data on the PSFCH resource, where the first COT is initiated by the first terminal apparatus; or if the PSFCH resource does not belong to the first COT in time domain, the second terminal apparatus receives the feedback information of the first data in a second COT or a third COT, where the second COT is a COT initiated by the second terminal apparatus, and the third COT is a COT initiated by the first terminal apparatus.

In some implementations, the method further includes: The second terminal apparatus sends indication information to the first terminal apparatus in the second COT, where the indication information indicates the first terminal apparatus to send the feedback information on a second time-frequency resource in a time-frequency resource set in the second COT.

In some implementations, the time-frequency resource set includes M resource blocks. The M resource blocks are determined based on a second bitmap, and/or a first frequency domain offset value, and/or a second frequency domain offset value. The second bitmap is configured by a network side, preconfigured, or specified according to a protocol. The time-frequency resource set includes a resource corresponding to a bit whose bit value is 1 in the second bitmap and that corresponds to the PSFCH resource.

In some implementations, a frequency domain resource position of the second time-frequency resource is indicated by using an order, indicated in the indication information, of the first terminal apparatus in feeding back corresponding feedback information; or a time domain resource position of the second time-frequency resource is indicated based on a position of a feedback time unit and/or a time offset that are/is indicated in the indication information.

In some implementations, the order of the first terminal apparatus in feeding back the corresponding feedback information is indicated by using one or more represented by an indication field in the indication information, a hybrid automatic repeat request process identifier associated with a physical sidelink shared channel PSSCH, a new data indicator associated with the PSSCH, source device information associated with the PSSCH, destination device information associated with the PSSCH, or group identifier information associated with the PSSCH.

In some implementations, when the first data corresponds to a second multicast type, a frequency domain resource position corresponding to the first terminal apparatus is related to a first identifier that is preconfigured for each terminal apparatus and that is used for transmission of the PSSCH, or is determined based on a combination of the first identifier and a source address identifier carried in control information.

In some implementations, the frequency domain resource position is indicated by using a bit value that is indicated in the indication information and that is used to send the feedback information across feedback time units.

In some implementations, the feedback information received in the third COT is in sidelink control information, a media access control control element, or a physical sidelink shared channel PSSCH.

In some implementations, the feedback information received in the third COT is on a channel, and a frequency domain position of the feedback information is indicated by sidelink control information.

In some implementations, the feedback information received by the second terminal apparatus in the third COT includes: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

In some implementations, when occupying all frequency domain resources or occupying a frequency domain resource that exceeds a preset threshold in a resource block set, the second terminal apparatus indicates a PSFCH resource set in the first COT or the third COT, where the PSFCH resource set is used by the first terminal apparatus or another terminal apparatus other than the first terminal apparatus to send feedback information.

According to a fourth aspect, a communication apparatus is provided. For beneficial effects, refer to descriptions of the first aspect. Details are not described herein again. The apparatus has a function of implementing a behavior in the method example in the first aspect. The function may be implemented by using hardware, or may be implemented by using hardware executing corresponding software. The hardware or software includes one or more modules corresponding to the foregoing function. In a possible design, the communication apparatus includes: a processing unit, configured to determine a common feedback resource; a receiving unit, configured to receive first data from a second terminal apparatus on a first time-frequency resource, where the processing unit is further configured to determine a first feedback resource corresponding to the first time-frequency resource, and the first feedback resource belongs to the common feedback resource; and a sending unit, configured to send a first signal on the first feedback resource.

According to a fifth aspect, a communication apparatus is provided. For beneficial effects, refer to descriptions of the second aspect. Details are not described herein again. The apparatus has a function of implementing a behavior in the method example in the second aspect. The function may be implemented by using hardware, or may be implemented by using hardware executing corresponding software. The hardware or software includes one or more modules corresponding to the foregoing function. In a possible design, the communication apparatus includes: a receiving unit, configured to receive first data from a second terminal apparatus; and a processing unit, configured to determine a physical sidelink feedback channel PSFCH resource associated with the first data. If the PSFCH resource belongs to a first channel occupancy time COT in time domain, the apparatus further includes a sending unit, configured to send feedback information corresponding to the first data to the second terminal apparatus on the PSFCH resource, where the first COT is initiated by the first terminal apparatus. Alternatively, if the PSFCH resource does not belong to the first COT in time domain, the sending unit is configured to send the feedback information of the first data in a second COT or a third COT, where the second COT is a COT initiated by the second terminal apparatus, and the third COT is a COT initiated by the first terminal apparatus.

According to a sixth aspect, a communication apparatus is provided. For beneficial effects, refer to descriptions of the second aspect. Details are not described herein again. The apparatus has a function of implementing a behavior in the method example in the third aspect. The function may be implemented by using hardware, or may be implemented by using hardware executing corresponding software. The hardware or software includes one or more modules corresponding to the foregoing function. In a possible design, the communication apparatus includes: a sending unit, configured to send first data to a first terminal apparatus; and a processing unit, configured to determine a physical sidelink feedback channel PSFCH resource associated with the first data. If the PSFCH resource belongs to a first channel occupancy time COT in time domain, the apparatus further includes a receiving unit, configured to receive feedback information corresponding to the first data on the PSFCH resource, where the first COT is initiated by the first terminal apparatus. Alternatively, if the PSFCH resource does not belong to the first COT in time domain, the receiving unit is configured to receive the feedback information of the first data in a second COT or a third COT, where the second COT is a COT initiated by the second terminal apparatus, and the third COT is a COT initiated by the first terminal apparatus.

According to a seventh aspect, a communication apparatus is provided, including: a processor and a memory storing instructions. When the instructions are executed by the processor, an electronic device is enabled to perform the method according to any one of the first aspect and the implementations of the first aspect.

According to an eighth aspect, a communication apparatus is provided, including: a processor and a memory storing instructions. When the instructions are executed by the processor, an electronic device is enabled to perform the method according to any one of the second aspect and the implementations of the second aspect.

According to a ninth aspect, a communication apparatus is provided, including: a processor and a memory storing instructions. When the instructions are executed by the processor, an electronic device is enabled to perform the method according to any one of the third aspect and the implementations of the third aspect.

According to a tenth aspect, a computer-readable storage medium is provided, where the computer-readable storage medium stores instructions. When the instructions are executed by an electronic device, the electronic device is enabled to perform the method performed by the first terminal apparatus or the second terminal apparatus in the foregoing aspects.

According to an eleventh aspect, a computer program product is provided, where the computer program product includes instructions. When the instructions are executed by an electronic device, the electronic device is enabled to perform the method performed by the first terminal apparatus or the second terminal apparatus in the foregoing aspects.

According to a twelfth aspect, this application provides a chip system. The chip system includes a processor, configured to implement a function of the first terminal apparatus or the second terminal apparatus in the methods in the foregoing aspects. In a possible design, the chip system further includes a memory, configured to store program instructions and/or data. The chip system may include a chip, or may include a chip and another discrete device.

According to a thirteenth aspect, this application further provides a communication system, including: a first terminal apparatus configured to perform the method in the first aspect and a second terminal apparatus in the first aspect, or a first terminal apparatus configured to perform the method in the second aspect and a second terminal apparatus configured to perform the method in the third aspect.

## BRIEF DESCRIPTION OF DRAWINGS

FIG. 1A to FIG. 1D are diagrams of communication systems according to embodiments of this application;
FIG. 2 is an example schematic flowchart of a communication method according to an embodiment of the present disclosure;
FIG. 2A is a diagram of a common feedback resource according to an embodiment of the present disclosure;
FIG. 3 is a diagram of a scenario with a lost COT according to an embodiment of the present disclosure;
FIG. 4 is a diagram of a common PSFCH resource according to an embodiment of the present disclosure;
FIG. 5 is another diagram of a common PSFCH resource according to an embodiment of the present disclosure;
FIG. 6 is a diagram of PSFCH transmission of each service type according to an embodiment of the present disclosure;
FIG. 7 is a diagram of an interlace (interlace) structure according to an embodiment of the present disclosure;
FIG. 8 is a diagram of representing common PSFCH resources in a resource pool by using a bitmap according to some embodiments of the present disclosure;
FIG. 9 is a diagram of a PSFCH resource configuration in a resource pool;
FIG. 10 is a diagram of a bitmap indication for PSFCH resources;
FIG. 11 is a diagram in which a PSSCH corresponds to a PSFCH time domain resource according to an embodiment of the present disclosure;
FIG. 12 is a diagram of PSFCH frequency domain resource allocation;
FIG. 13 is diagram of a common interlace structure for a PSFCH format 0;
FIG. 14 is another example schematic flowchart of a communication method according to an embodiment of this application;
FIG. 15 is a diagram of a scenario in which a PSSCH-PSFCH mapping relationship may be interrupted according to an embodiment of this disclosure;
FIG. 16 is an example flowchart of a communication method according to some embodiments of the present disclosure;
FIG. 17 shows fields that need to be included in a COT indication according to some embodiments of the present disclosure;
FIG. 18 is a diagram of explicitly indicating a PSFCH feedback position by TX UE according to some embodiments of the present disclosure;
FIG. 19 is another diagram of explicitly indicating a PSFCH feedback position by TX UE according to some embodiments of the present disclosure;
FIG. 20 is a diagram of sending a HARQ and data together according to some embodiments of this disclosure;
FIG. 21 is a diagram of sending a HARQ and SCI together according to some embodiments of this disclosure;
FIG. 22 is a flowchart of an implementation of some embodiments of the present disclosure at a first terminal apparatus;
FIG. 23 is a flowchart of an implementation of some other embodiments of the present disclosure at a first terminal apparatus;
FIG. 24 is a flowchart of an implementation of some other embodiments of the present disclosure at a second terminal apparatus;
FIG. 25 is a simplified block diagram of an example device in a possible implementation according to an embodiment of this application; and
FIG. 26 is a simplified block diagram of an example device in a possible implementation according to an embodiment of this application.

**DESCRIPTION OF EMBODIMENTS**

Embodiments of this disclosure are described in detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof should be understood as non-exclusive inclusions, that is, "include but are not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to cellular communication protocols such as 3rd-generation (3rd Generation, 3G), 4th-generation (4G), 5th-generation (5G), and future communication protocols (for example, 6th-generation (6G)), wireless local area network communication protocols such as the Institute of Electrical and Electronics Engineers (Institute of Electrical and Electronics Engineers, IEEE) 802.11, and/or any other protocols currently known or developed in future.

The technical solutions of embodiments of the present disclosure are applied to a communication system that complies with any proper communication protocol, for example, a general packet radio service (General Packet Radio Service, GPRS) system, a global system for mobile communications (Global System for Mobile Communications, GSM) system, an enhanced data rates for GSM evolution (Enhanced Data rate for GSM Evolution, EDGE) system, a universal mobile telecommunications system (Universal Mobile Telecommunications Service, UMTS) system, a long term evolution (Long Term Evolution, LTE) system, a wideband code division multiple access (Wideband Code Division Multiple Access, WCDMA) system, a code division multiple access 2000 (Code Division Multiple Access, CDMA2000) system, a Time division-synchronous code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th-generation (5G) system (for example, a new radio (New Radio, NR) system) and a future communication system (for example, a 6th-generation (6G) system), and the like.

For the purpose of illustration, the following describes embodiments of the present disclosure in the context of a 5G communication system in 3GPP. However, it should be understood that embodiments of this disclosure are not limited to the communication system, but may be applied to any communication system having a similar problem, for example, a wireless local area network (WLAN), a wired communication system, or another communication system developed in the future.

The term "terminal" or "terminal device" used in this disclosure refers to any terminal device that can perform wired or wireless communication with a network device or any terminal devices that can perform wired or wireless communication with each other. The terminal device may be sometimes referred to as user equipment (User Equipment, UE). The terminal device may be a mobile terminal, a fixed terminal, or a portable terminal of any type. The terminal device may be various wireless communication devices that have a wireless communication function. With emergence of an internet of things (Internet of Things, IOT) technology, more devices that previously have no communication function, for example without limitation to, a household appliance, a transportation tool, a tool device, a service device, and a service facility, start to obtain a wireless communication function by being configured with a wireless communication unit, so as to access a wireless communication network, and accept remote control. Such a device has the wireless communication function because the device is configured with the wireless communication unit, and therefore also belongs to the scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modulator demodulator (Modulator demodulator, Modem), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device (for example, a smart watch), a terminal device in a 5G network or any terminal device in an evolved public land mobile network (Public Land Mobile Network, PLMN), another device that can be used for communication, or any combination thereof. This is not limited in embodiments of this disclosure.

The term "network node" or "network device" used in this disclosure is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include base stations of various types. The base station is configured to provide a wireless access service for the terminal device. Specifically, each base station corresponds to a service coverage area, and a terminal device entering the area may communicate with the base station by using a radio signal, to receive a radio access service provided by the base station. The service coverage areas of the base stations may overlap, and a terminal device in an overlapping area may receive radio signals from multiple base stations. Therefore, the multiple base stations may simultaneously provide services for the terminal device. Based on a size of the provided service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, remote radio units (Remote Radio Unit, RRU), radio frequency heads (Radio Head, RH), remote radio heads (Remote Radio Head, RRH), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this disclosure, the foregoing apparatuses that provide a wireless communication function for the mobile terminal are collectively referred to as a network device. This is not specifically limited in embodiments of this disclosure.

D2D refers to a technology of direct communication between two user equipments or multiple user equipments (User Equipment, UE for short). Typical D2D devices include a Bluetooth device, a WiFi-Direct device, and the like. In a wireless communication network defined in 3GPP, an air interface (air interface) for direct communication between users is PC5, and therefore the direct communication is also referred to as PC5 communication. From a perspective of link, a link for direct communication between users is defined as a sidelink (sidelink, SL), and the direct communication may also be referred to as sidelink communication. The sidelink communication includes multiple usage scenarios, for example, communication between vehicle-to-everything (Vehicle-to-everything, V2X) and an intelligent terminal. Vehicle-to-everything, V2X for short, is communication between a vehicle and another vehicle or a device that may affect the vehicle, including vehicle-to-vehicle (Vehicle to Vehicle, V2V for short) communication, vehicle-to-pedestrian (Vehicle to Pedestrian, V2P for short) communication, vehicle-to-infrastructure (Vehicle to Infrastructure, V2I for short) communication, and vehicle-to-network (Vehicle to Network, V2N for short) communication. The transmission is based on sidelink transmission, and may be considered as an application of sidelink transmission in vehicle-to-everything. Communication between intelligent terminals is typically, for example, communication between a mobile phone and a wearable device, communication between an AR/VR helmet or glasses and a smart screen, and communication between sensors.

In a wireless communication system, bands may be classified into a licensed frequency band and an unlicensed frequency band according to different frequency bands that are used. On the licensed frequency band, a user uses a spectrum resource based on scheduling of a central node. In a 4G long term evolution (Long Term Evolution, LTE) system, research on unlicensed frequency bands is started for cellular mobile communication, and technologies such as LTE-U (LTE in Unlicensed spectrum), LAA (Licensed Assisted Access) and MulteFire emerge. However, the unlicensed frequency band has been originally used by some wireless communication devices, for example, a Wi-Fi device. The LTE system introduces a listen-before-talk (listen-before-talk, LBT) mechanism, so that the LTE system can coexist with a Wi-Fi device, and enables LTE Uu interface communication on an unlicensed frequency band. In addition to the Uu interface, there is a PC5 interface, which is a communication interface between user equipments (User Equipment, UE). A transmission link over the PC5 interface is defined as a sidelink (Sidelink, SL). Enabling SL communication on the unlicensed frequency band in local space is an important evolution direction, and corresponding protocol technologies may be collectively referred to as SL-U. Similar to the Uu interface, UE that operates according to the SL-U also need to coexist with a nearby Wi-Fi device based on the LBT mechanism.

On an unlicensed frequency band, a transmit node uses a spectrum resource in a contention-based manner. Specifically, the transmit node contends for a channel in a listen-before-talk LBT (Listen-before Talk) manner. The LBT mechanism is essentially a channel access rule based on random back-off (random back-off). Before accessing a channel and starting to send data, UE needs to sense (sense) whether the channel is idle (idle). If the channel has remained idle for a specific period of time, the UE can occupy the channel. If the channel is not idle, the UE can occupy the channel only after the channel is restored to idle. A reason why the LBT mechanism becomes a mandatory feature of an unlicensed frequency band is that all regions in the world have a regulation (Regulation) requirement on use of the unlicensed frequency band. UEs in various forms operating according to different communication protocols can use the unlicensed frequency band only when regulations are met, to fairly and efficiently use spectrum resources.

For an unlicensed spectrum of FR1, before transmission, the UE needs to perform LBT on each 20 MHz channel. To avoid interference between different channels, the UE cannot send data on the entire 20 MHz bandwidth, but reserves a part of frequency band resources as a guard bandwidth (guard band), and sends data only on the remaining part of the frequency domain resources. This part of resources that are available is referred to as a resource block set (RB set). When the UE performs LBT operations on multiple consecutive 20 MHz channels and successfully accesses the channel, a guard bandwidth between two RB sets may be used for data transmission, improving resource utilization.

An unlicensed spectrum resource may be shared between different user equipments, that is, as long as specific regulations are met, a network device 130 or 140 can use the spectrum to receive and send information. If user equipment obtains a transmission opportunity through LBT, a length of time corresponding to the transmission opportunity and in which continuous sending of information can be performed is referred to as a channel occupancy time (channel occupancy time, COT for short). After obtaining the COT, the user equipment may share a spectrum with another user equipment, and send a resource shared in the COT, including a corresponding moment and a frequency domain position, to the another user equipment. After receiving the shared information, the another user equipment may send information by using a specified frequency domain resource at a specified moment. In addition, a device used in a D2D technology is usually a half-duplex device, that is, the UE can only receive information or send information at one moment, and does not have a capability of simultaneously receiving and sending information.

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

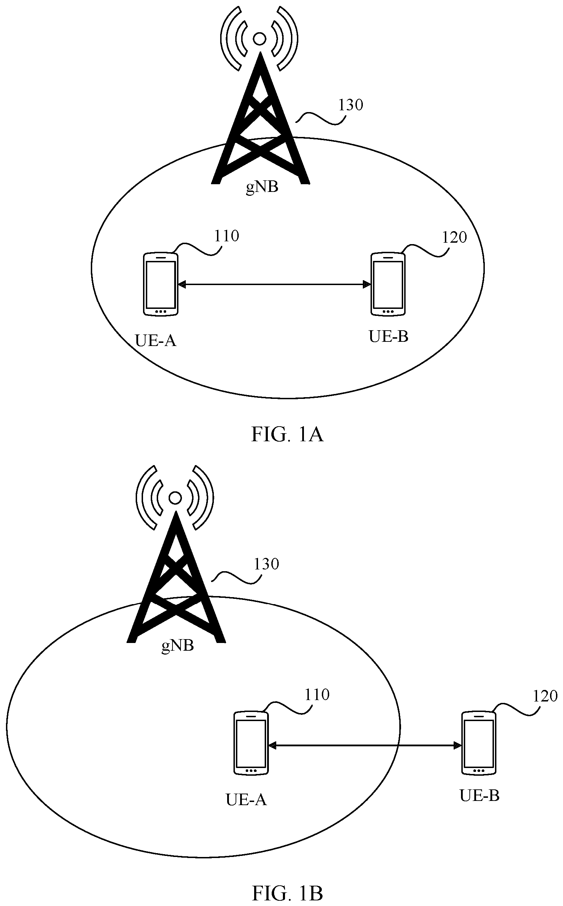

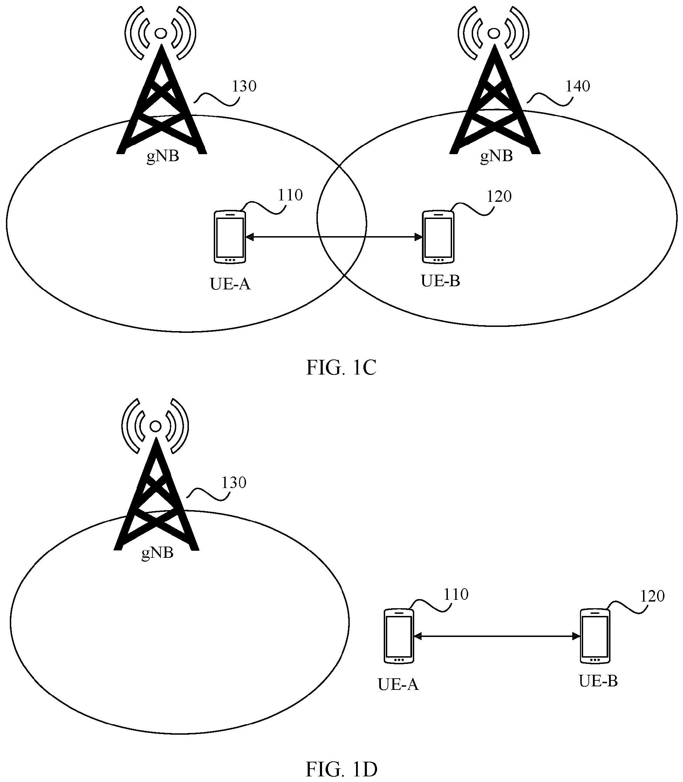

As shown in FIG. 1A to FIG. 1D, the communication method provided in embodiments of this application is applicable to a scenario supported by sidelink (sidelink) communication, and supports a communication scenario with and without network coverage. In this scenario, a terminal device 110 or 120 may be UE (user equipment), for example, UE-A or UE-B. A network device 130 or 140 may be a base station. In scenarios in which the UE-A shown in FIG. 1A, FIG. 1B, and FIG. 1C is in network coverage, the UE-A may communicate with the UE-B over a sidelink in a manner of base station scheduling, where the resource may be referred to as a licensed resource or a licensed frequency band, or may perform communication without using a base station scheduling mode. The UE-A may autonomously perform resource selection, that is, select a resource for sidelink communication from a resource pool, where the resource may be referred to as an unlicensed resource or an unlicensed frequency band. In FIG. 1D, both the UE-A and the UE-B are in a non-coverage area. Only a sidelink may be established in a resource self-selection manner for communication.

It should be understood that a resource in embodiments disclosed in this application is a time-frequency resource. A spectrum used for sidelink communication may be an unlicensed frequency band, a licensed frequency band, and/or a dedicated frequency band. Before transmission is performed by using an unlicensed frequency band, a regional regulation requirement, for example, LBT, needs to be met for channel access.

The network device 130 or 140 in embodiments disclosed in this application may be a network device 130 or 140 in different network systems, for example, a base station. UE (user equipment) may be various user communication devices. In a case in which base station scheduling exists, considering Uu (UTRAN-to-UE) air interface transmission, two parties of wireless communication are the network device 130 or 140 and a user communication device. Considering SL air interface transmission, both a receive end and a transmit end of wireless communication are user communication devices.

The network device 130 or 140 may be any device having a wireless transceiver function, including but not limited to: a conventional macro base station eNB (evolved node B) in a conventional UMTS/LTE (Universal Mobile Telecommunications System, universal mobile telecommunications system/Long Term Evolution, long term evolution) wireless communication system, a micro base station eNB in a HetNet (Heterogeneous Network, heterogeneous network) scenario, a baseband processing unit BBU (Base Band Unit, baseband unit) and a radio frequency unit RRU (Remote Radio Unit, remote radio unit) in a distributed base station scenario, a baseband pool BBU pool and a radio frequency unit RRU in a CRAN (Cloud Radio Access Network, cloud radio access network) scenario, a gNB in a future wireless communication system, a evolved base station in 3GPP, an access node in a Wi-Fi system, a wireless relay node, a wireless backhaul node, or the like. The base station may be a macro base station, a micro base station, a pico base station, a small cell, a relay station, a balloon station, or the like. Alternatively, the network device 130 or 140 may be a server, a wearable device, a vehicle-mounted device, or the like.

The user equipment may be a vehicle-mounted communication module or another embedded communication module, a mobile phone (mobile phone), a tablet computer (Pad), a computer with a wireless transceiver function, a virtual reality (VR) terminal device, an augmented reality (AR) terminal device, a wireless terminal in industrial control (industrial control), a haptic terminal device, a vehicle-mounted terminal device, a wireless terminal in unmanned driving, a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a wearable terminal device, and the like.

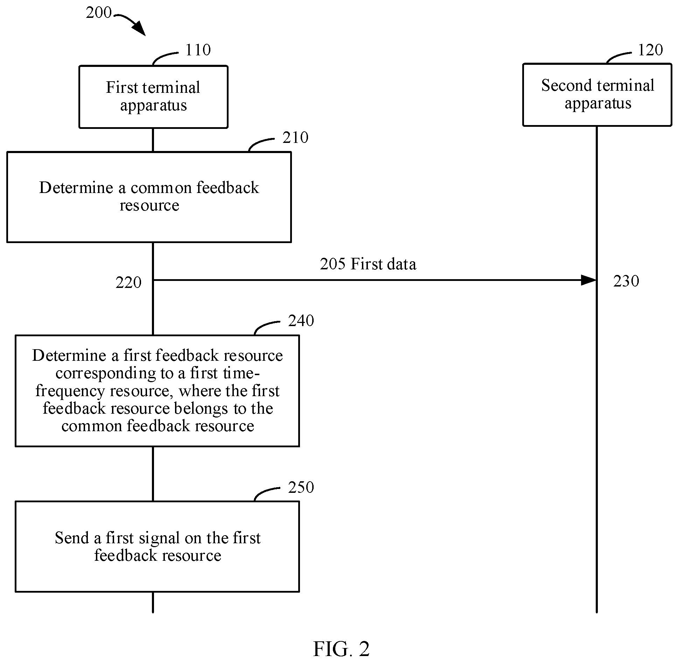

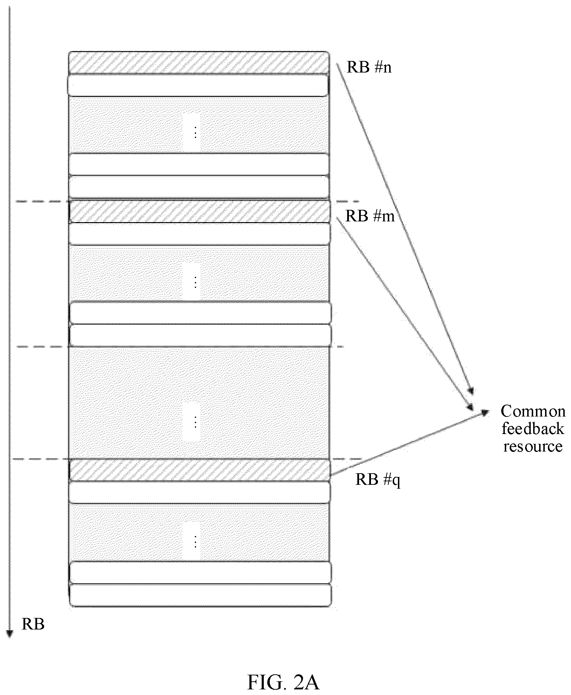

FIG. 2 is an example schematic flowchart of a communication method 200 according to an embodiment of the present disclosure. As shown in FIG. 2, a first terminal apparatus determines (210) a common feedback resource. A second terminal apparatus sends (220) first data 205 to the first terminal apparatus, and correspondingly, the first terminal apparatus receives (230) the first data 205 from the second terminal apparatus on a first time-frequency resource. The first terminal apparatus determines (240) a first feedback resource corresponding to the first time-frequency resource, where the first feedback resource belongs to the common feedback resource. The first terminal apparatus sends (250) a first signal on the first feedback resource.

In some embodiments, the common feedback resource is also referred to as a common PSFCH resource, and is used by the first terminal apparatus or another terminal apparatus to send a signal. A signal or data transmitted on the common feedback resource is not data or a signal that a terminal apparatus is expected to correctly decode, and the common feedback resource is not a resource dedicated to a type of transmission or a terminal apparatus.

In some embodiments, the common feedback resource may include two discontiguous resource blocks, and a frequency domain interval between the two discontiguous resource blocks is *Offset* (offset value) resource blocks. The two resource blocks may be respectively a 1$^{st}$ resource block and a last resource block in a second frequency domain resource, and the second frequency domain resource is a frequency domain resource used by the first terminal apparatus to send feedback information. The frequency domain interval herein is a quantity of resource blocks between the two discontiguous resource blocks. The common feedback resource may be indicated by a network device, may be preconfigured, or may be predefined.

In some embodiments, a common feedback resource set is on a first channel, and the first channel includes at least one 20 MHz bandwidth, or the first channel includes at least one nominal bandwidth, or the first channel includes at least one resource block set.

In some embodiments, a bandwidth corresponding to (*Offset*- 2) resource blocks is greater than or equal to a product of a bandwidth of the first channel and a first coefficient. In other words, a bandwidth corresponding to the second frequency domain resource is greater than or equal to the product of the bandwidth of the first channel and the first coefficient, where the first coefficient is greater than 0 and less than 1. For example, 0.8 < the first coefficient < 1. In some embodiments, the first coefficient is a minimum proportion of occupancy of a first bandwidth that meets an OCB requirement. An objective of this design is to make sending the feedback information by the first terminal apparatus by using the second frequency domain resource meet an OCB requirement. In some embodiments, the second frequency domain resource may further include at least one resource block between the two discontiguous resource blocks.

As shown in FIG. 2A, resource blocks numbered RB #n and RB #m in a common feedback resource are not adjacent. In some embodiments, the common feedback resource is an $m^{CR}$ interlace resource/sub-channel in a resource pool or a resource block set (RB set). The interlace resource/sub-channel includes at least two resource blocks interlaced in frequency domain, where $m$ is an integer greater than or equal to 1 and less than or equal to a total quantity of interlace resources in the resource pool or the resource block set. A value of $m$ is predefined, is preconfigured, or is indicated to or configured for the first terminal apparatus by the network device by using DCI (downlink control information), RRC (radio resource control) signaling, SIB (system information block) information, or MIB information. Therefore, the first terminal apparatus may determine, through preconfiguration or predefinition, that the $m^{CR}$ interlace resource/sub-channel of the first channel is the common feedback resource.

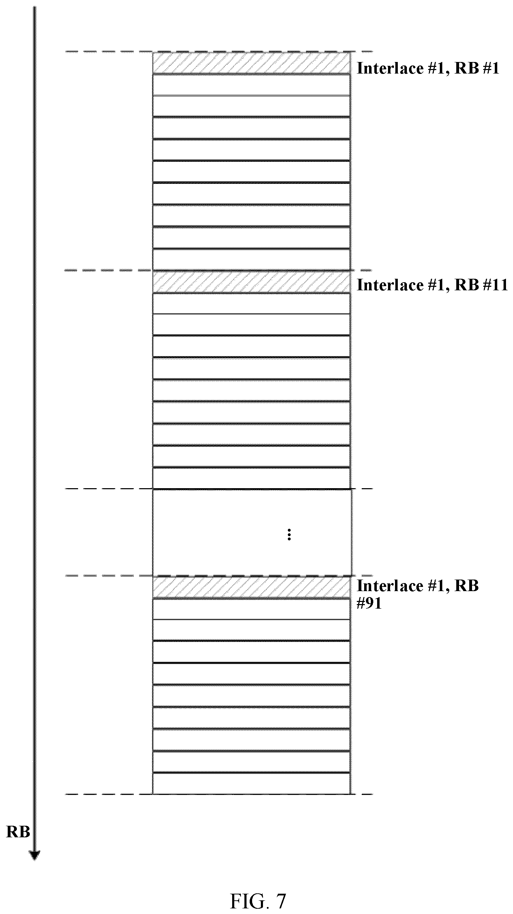

A common feedback resource, for example, an interlace resource #1 (interlace #1) shown in FIG. 7 below, is used as the common feedback resource. Optionally, all PRBs included in the interlace resource #1 in FIG. 7 are the common feedback resource, or a resource block with a smallest index and a resource block with a largest index included in the interlace resource #1 are the common feedback resource.

In some embodiments, the common feedback resource is an $m^{CR}$ sub-channel in a resource pool or a resource block set (RB set). The sub-channel includes at least two resource blocks interlaced in frequency domain, where $m$ is an integer greater than or equal to 1 and less than or equal to a total quantity of sub-channels in the resource pool or the resource block set. A value of $m$ is predefined, is preconfigured, or is indicated to or configured for the first terminal apparatus by the network device by using DCI, RRC signaling, SIB information, or MIB information. Therefore, the first terminal apparatus may determine, through preconfiguration or predefinition, that the $m^{CR}$ sub-channel of the first channel is the common feedback resource.

For example, as shown in FIG. 7 in the following embodiment, an interlace resource #1 is used as the common feedback resource. Optionally, all PRBs included in the interlace resource #1 in FIG. 7 are the common feedback resource, or a resource block with a smallest index and a resource block with a largest index included in the interlace resource #1 are the common feedback resource.

In some embodiments, a resource block in the common feedback resource is related to a first bitmap.

A PSFCH resource may occupy two OFDM symbols, and a periodicity is configured by a system. N = 1/2/4 slots. PSFCH feedback resources correspond to PSSCH transmission resources in a one-to-one manner. Currently, NR-SL supports unicast, a multicast type 1 (NACK-only), and a multicast type 2 (NACK and ACK feedback) feedback. Feedback is not needed for broadcast. In a multicast type 1 (NACK-only) scenario, if a user in a group can correctly decode a PSCCH corresponding to a PSSCH but PSSCH decoding fails, a PSFCH sequence carrying NACK information is fed back.

Otherwise, no information is fed back. Alternatively, when a value of a service transmission type indicator (Cast type indicator) field in second-stage SCI (including SCI-format 2-A) is "11", it indicates the multicast type 1. Alternatively, when second-stage SCI implicitly or explicitly indicates that the HARQ-ACK feedback information corresponding to current data includes only a NACK, the service type is the multicast type 1.

In a multicast type 2 (NACK/ACK) scenario, if a user in a group can correctly decode a PSCCH corresponding to a PSSCH, if PSSCH decoding fails based on HARQ enabling indication information of control information, a PSFCH sequence carrying NACK information is fed back. Otherwise, a PSFCH sequence carrying NACK information is fed back.

Alternatively when a value of a service transmission type indicator (Cast type indicator) field in the second-stage SCI (including SCI-format 2-A) is "01", it indicates the multicast type 2.

On an unlicensed frequency band, a terminal needs to perform an LBT operation before sending data, and the terminal can send data in a COT only after the LBT succeeds. When feedback is not needed for a corresponding PSSCH resource in a COT, because one piece of PSFCH feedback occupies three OFDM symbols (including the two OFDM symbols mentioned above and one OFDM symbol occupied by a receiving/transmitting switching gap (gap)), transmission interruption in the COT may be longer than 25 μs, causing a risk of a lost COT. In this embodiment of the present disclosure, the first signal is sent on the first feedback resource that belongs to the common feedback resource, to ensure that the COT is not lost.

In some embodiments, the signal on the common feedback resource may be feedback information or another signal other than the feedback information. For example, the signal on the common feedback resource may represent a corresponding PSSCH receiving status, or may be other data or another signal. A signal sent by the first terminal apparatus on the first feedback resource may be referred to as the first signal, and the first signal may be feedback information or another signal other than the feedback information sent by the first terminal apparatus to the second terminal apparatus.

In some embodiments, when the first data corresponds to a unicast type, the first terminal apparatus sends feedback information on a second feedback resource corresponding to the first time-frequency resource, where the feedback information is an acknowledgment or a negative acknowledgment for the first data. The second feedback resource does not belong to the common feedback resource. In some embodiments, the second feedback resource and the first feedback resource may not overlap in frequency domain.

In some embodiments, when the first data corresponds to a first multicast type (or referred to as a multicast type 1), the first terminal apparatus sends feedback information on a second feedback resource corresponding to the first time-frequency resource, where the feedback information is an acknowledgment or a negative acknowledgment for the first data. The second feedback resource does not belong to the common feedback resource.

In some embodiments, when the first data corresponds to a second multicast type (or referred to as a multicast type 2), and hybrid automatic repeat request confirmation information corresponding to the first data is a negative acknowledgment, the first terminal apparatus sends feedback information on a second feedback resource corresponding to the first time-frequency resource, where the feedback information is a negative acknowledgment for the first data.

The first feedback resource and the first time-frequency resource belong to a same resource block set, and/or the first feedback resource and the second feedback resource belong to a same resource block set.

Service scenarios supporting PSFCH feedback in this embodiment of the present disclosure may specifically support three scenarios: unicast, multicast, and broadcast. Physical layer HARQ feedback is supported for unicast and multicast. There are two multicast scenarios: the multicast type 1 and the multicast type 2. In a unicast scenario, a transmit end user and a receive end user form a unicast connection pair. After correctly receiving control information from the transmit end user, if a PSSCH is correctly decoded based on HARQ enabling indication information of the control information, the receive end user sends a PSFCH sequence carrying ACK information to the transmit end user. Otherwise, the receive end user feeds back a PSFCH sequence carrying NACK information. In a multicast type 1 (NACK-only) scenario, if a user in a group can correctly decode a PSCCH corresponding to a PSSCH but PSSCH decoding fails, a PSFCH sequence carrying NACK information is fed back. Otherwise, no information is fed back. In a multicast type 2 (NACK/ACK) scenario, if a user in a group can correctly decode a PSCCH corresponding to a PSSCH, if PSSCH decoding fails based on HARQ enabling indication information of control information, a PSFCH sequence carrying NACK information is fed back. Otherwise, a PSFCH sequence carrying NACK information is fed back.

In some solutions, a PSFCH resource occupies two OFDM symbols, and a periodicity is configured by a system. N = 1/2/4 slots. PSFCH feedback resources correspond to PSSCH transmission resources in a one-to-one manner. Currently, NR-SL supports unicast, a multicast type 1 (NACK-only), and a multicast type 2 (NACK and ACK feedback) feedback. Feedback is not needed for broadcast.

On an unlicensed frequency band, a terminal needs to perform an LBT operation before sending data, and the terminal can send data in a COT only after the LBT succeeds. For the LBT access manner, energy-based detection and signal type-based detection are usually used. For example, energy detection is used for NR-U, and a combination of the two detection methods is used in Wi-Fi. A detection threshold (Energy Detection Threshold) needs to be set for the energy-based detection. When detected energy exceeds the detection threshold, it is determined that a channel is busy, and access to the channel is not allowed. When detected energy is lower than the detection threshold for longer than a period of time, access to the channel is allowed. According to national and regional regulation requirements for using an unlicensed frequency band, in an example of a 5 GHz frequency band, for accessing a 20 MHz channel, a minimum occupied channel bandwidth (Occupied Channel Bandwidth, OCB) requirement needs to be met for accessing the channel. Usually, the minimum OCB is at least 80% of a normal bandwidth. In an example of 20 MHz, a bandwidth of at least 16 MHz needs to be occupied for preempting the 20 MHz channel. A 3GPP NR-U system introduces a concept of interlaced resource block (interlaced resource block), and defines that an interlace $m \in \{0,1, ... , M-1\}$ includes $\{m, M+m, 2M+m, 3M+m, ...\}$ RBs.

To comply with laws and regulations, the LBT mechanism is classified into the following types:

Category 1 LBT: Perform sending immediately after a short switching gap (switching gap). Category 1 LBT is referred to as Cat 1 LBT for short, which is used by a communication device to immediately perform sending after a switching gap from a receiving state to a sending state in a channel occupancy time (Channel Occupancy Time, COT). The COT refers to a duration for which the communication device is allowed to occupy the channel after successfully accessing the channel, and the switching gap may not be longer than 16 µs.

Category 2 LBT (Category 2 LBT): LBT without random back-off. Category 2 LBT is referred to as Cat 2 LBT for short, which is used by a communication device to perform sending without performing random back-off after the communication device senses that a channel is in an idle state and remains in the idle state for a determined duration.

Category 3 LBT (Category 3 LBT): LBT with random back-off with a contention window (contention window) of a fixed size. Category 3 LBT is referred to as Cat 3 LBT for short, which is used by a communication device to generate a random number N based on a contention window of a fixed size, and perform sending after sensing that a channel is in an idle state and remains in the idle state for a period of time determined based on the random number N. The size of the contention window is related to a minimum value and a maximum value of N.

Category 4 LBT (Category 4 LBT): LBT with random back-off with a contention window of a variable size. Category 4 LBT is referred to as Cat 4 LBT for short, which is used by a communication device to generate a random number N based on a contention window of a variable size, and perform sending after sensing that a channel is in an idle state and remains in the idle state for a period of time determined based on the random number N. The size of the contention window is related to a minimum value and a maximum value of N, and the communication device can change the size of the contention window.

An NR-U device complies with a 3GPP protocol, and uses an LBT mechanism as a channel access method. Specifically, the NR-U device uses the following several types of LBT:

Type 1 LBT: Cat 4 LBT. The NR-U device needs to perform random back-off before accessing a channel and sending data.

Specifically, after sensing for the first time that the channel is idle in a sensing slot duration (sensing slot duration) of a defer sensing duration (defer sensing, denoted as $T_d$), and after a counter N in the following step 4 is zero, the network device 130 or 140 or the terminal device 110 or 120 may initiate transmission. Specifically, according to the following steps, the channel is sensed to obtain an additional sensing slot duration, to adjust the counter N:

Set $N = N_{init}$, where $N_{init}$ is a random number uniformly distributed between 0 and $CW_p$, and go to step 4.

If $N > 0$, and the network device 130 or 140 or the terminal device 110 or 120 chooses to decrement the counter, set $N = N - 1$.

Sense the channel for an additional sensing slot duration, and if the channel is idle in the additional sensing slot duration, go to step 4; else, go to step 5.

If $N = 0$, stop; else, go to step 2.

Sense the channel until either a busy channel is detected within an additional $T_d$ or all the sensing slots of the additional $T_d$ are detected to be idle.

If the channel is sensed to be idle during all the sensing slots of the additional $T_d$, go to step 4; else, go to step 5.

$T_d$ includes a duration $T_f = 16$ us, which is followed by $m_p$ consecutive sensing slot durations (denoted as $T_{sl}$). $T_f$ includes an idle sensing slot duration $T_{sl}$ at the beginning of the sensing slot duration.

$CW_{min,p} \le CW_p \le CW_{max,p}$ is a contention window.

$CW_{min,p}$ and $CW_{max,p}$ are selected before step 1 of the preceding procedure.

$m_p$, $CW_{min,p}$, and $CW_{max,p}$ are based on a channel access priority class $p$ associated with transmission of the network device 130 or 140 or the terminal device 110 or 120, as shown in the following table.

Table 1

| Channel access priority class (p) | $m_p$ | $CW_{min,p}$ | $CW_{max,p}$ | $T_{mcot,p}$ | $CW_p$ size allowed |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |

(continued)

| Channel access priority class (p) | $m_p$ | $CW_{min,p}$ | $CW_{max,p}$ | $T_{mcot,p}$ | $CW_p$ size allowed |
|---|---|---|---|---|---|
| 4 | 7 | 15 | 1023 | 8 or 10 ms | {15,31,63,127,255,511,1023} |

The channel occupancy time (Channel Occupancy Time, COT) of transmission perform by the network device 130 or 140 or the terminal device 110 or 120 on the channel does not exceed $T_{mcot,p}$, where the channel access procedure is performed based on the channel access priority class $p$ associated with the transmission of the network device 130 or 140 or the terminal device 110 or 120.

The network device 130 or 140 or the terminal device 110 or 120 maintains a contention window value $CW_p$, and adjusts a value of $CW_p$ before step 1 based on the following steps:
For each priority class $p \in \{1,2,3,4\}$, set $CW_p = CW_{min,p}$.

In feedback HARQ-ACK values corresponding to data sent in a reference subframe k by the network device 130 or 140 or the terminal device 110 or 120, if at least Z=80% is determined as NACK, a $CW_p$ value corresponding to each priority class $p \in \{1,2,3,4\}$ is increased to a next higher allowed value, and is used in step 2. Otherwise, perform step 1. The reference subframe k is a start subframe of latest transmission performed by the network device 130 or 140 or the terminal device 110 or 120 on the channel.

Type 2A LBT: Cat 2 LBT with a gap of 25 $\mu$s. After sensing that a channel is idle for 25 $\mu$s, the NR-U device may access the channel and send data.

Type 2B LBT: Cat 2 LBT with a gap of 16 $\mu$s. After sensing that a channel is idle for 16 $\mu$s, the NR-U device may access the channel and send data.

Type 2C LBT: Cat 1 LBT with a gap up to 16 $\mu$s. The NR-U device does not need to sense a channel, and may directly access the channel and send data after a switching gap of up to 16 $\mu$s in the COT.

From a perspective of a type of a device that performs LBT, when the NR-U device and Wi-Fi coexist, the NR-U device may serve as load based equipment (Load Based Equipment, LBE), and may perform channel sensing and contention-based access at any time point without considering a frame boundary. In addition to serving as LBE, the NR-U device may also work as frame based equipment (Frame Based Equipment, FBE). In this case, the NR-U device is allowed to obtain a COT only through contention-based channel access on a frame boundary synchronized in a system. The "frame" herein represents a fixed frame period (Fixed Frame Period, FFP). A specific period value is configured by using radio resource control (Radio Resource Control, RRC) signaling. A period value supported by a current protocol is 1 ms, 2 ms, 2.5 ms, 4 ms, 5 ms, and 10 ms, and a duration of two radio frames, that is, 20 ms, can be exactly divided.

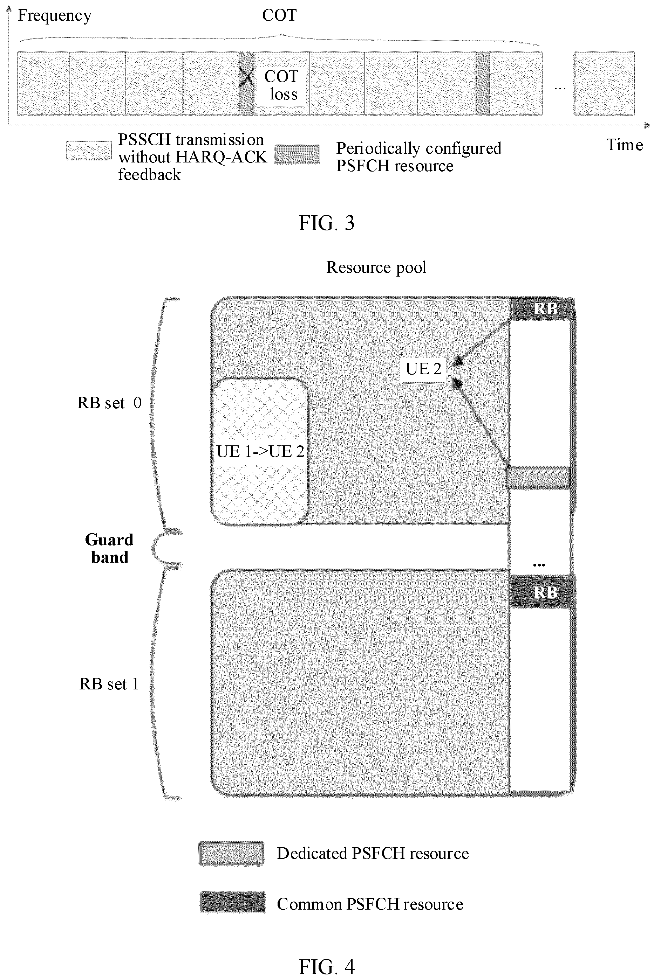

When feedback is not needed for a corresponding PSSCH resource in a COT, because one piece of PSFCH feedback occupies three OFDM symbols (including the two OFDM symbols mentioned above and one OFDM symbol occupied by a receiving/transmitting switching gap (gap)) and occupies only one PRB (physical resource block) resource, when there is no feedback information for some PSSCH transmissions, for example, blind transmission and the multicast type NACK-only, it is likely that no user performs transmission in a slot in which a corresponding PSFCH is located. In this case, transmission interruption in the COT may be longer than 25 $\mu$s, causing a risk of a lost COT. FIG. 3 is a diagram of scenario with a lost COT according to an embodiment of the present disclosure. When a COT is of a broadcast service type, no terminal performs HARQ-ACK feedback on a corresponding PSFCH resource. In this case, an inter-RAT terminal may succeed in LBT and preempt the COT.

Therefore, in some embodiments of the present disclosure, a common PSFCH resource set is defined in a resource pool, and the common PSFCH resource includes one or more PRB resources. The aim of the common PSFCH resource set is that a resource defined in the common PSFCH resource set is a resource on which all UEs may send signals, instead of a PRB resource dedicated to a PSFCH transmission. However, the signal sent on the common PSFCH resource may not be used for real feedback information of corresponding PSSCH data, that is, TX UE receives and decodes HARQ information only on dedicate (dedicated) PSFCH resources.

Because feedback information for multiple users or multiple service types may be present in a slot in which a PSFCH is located, a feedback type of another user or presence of feedback information may not always be determined completely between UEs that perform feedback. To ensure that the COT is not lost, after the common PSFCH resource is defined in the resource pool, regardless of a service type, RX UE (which is an example of the first terminal apparatus) needs to send a signal on the common PSFCH resource. Especially for the NACK-only and blind retransmission type, the RX UE does not need to feed back any information according to some solutions. However, in the solutions in embodiment of the present disclosure, to ensure that the COT is not lost, the RX UE needs to send a first signal on a common PSFCH resource, to ensure that the COT is not lost. The sent first signal may be feedback information or other information, or may be receiving status information corresponding to a current PSSCH, that is, a NACK, an ACK, or the like. However, for a user of a unicast service type and a multicast type 2 service type, the RX UE not only needs to send a first signal on a common PSFCH resource, but also needs to transmit feedback information on a dedicated PSFCH resource.

OCB regulations in some regions require that signal transmission occupies 80% of a nominal bandwidth (20 MHz). In SL-U, an NRU design may be reused, that is, an interlace structure is introduced, to meet the OCB. Similarly, for PSFCH transmission, the OCB requirement also needs to be met.

When OCB requirements are raised in some regions, the common PSFCH resource in this case may be a common interlace, and the interlace is an interlace structure. The common PSFCH resource set should be at a resource pool level, and may be (pre)configured or agreed on according to a protocol. If the common PSFCH resource set is (pre) configured, the common PSFCH resource set may be indicated by using a bitmap (bitmap). If the common PSFCH resource set is agreed on according to a protocol, for a region without an OCB requirement, an RB included in the common PSFCH resource set may be a $1^{st}$ RB, a last RB, or an RB at a specific position in each RB set (resource block set). For a region with an OCB requirement, the common PSFCH resource set may be a PRB resource included in an interlace #0 in a resource pool, or an interlace resource is selected, where a PRB resource included in the interlace does not belong to a guard band (guard band). For the common PSFCH resource, an RB resource belonging only to the RB set should be preferentially selected, so that inclusion of a resource belonging to the guard band is avoided. When inclusion of a resource belonging to a guard band cannot be avoided, the PSFCH may be sent not on a PRB on the guard band.

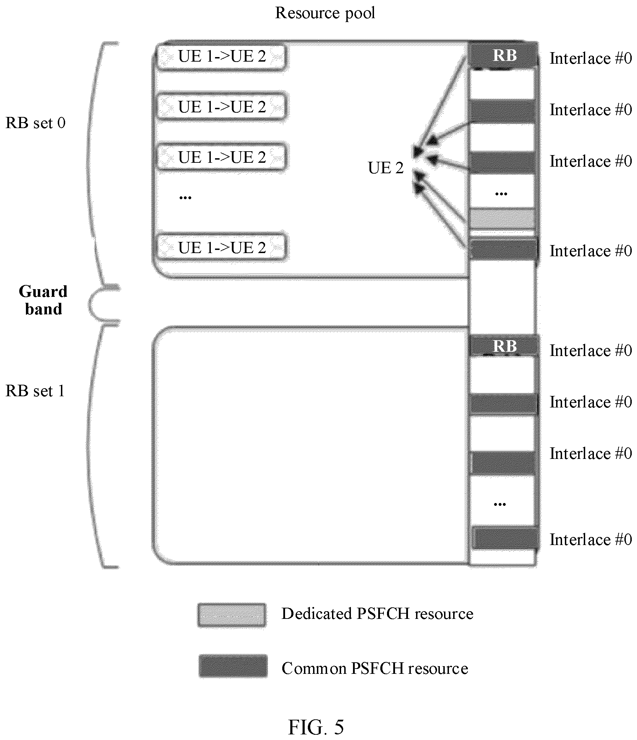

For a region without an OCB regulation requirement, in this case, the common PSFCH resource includes several RBs, and these RB resources should be distributed on each RB set in the resource pool. Similarly, when the common PSFCH resource is defined as an interlace structure to meet the OCB requirement in this case, the common PSFCH resource should include interlace RBs in all RB sets in the resource pool. FIG. 4 is a diagram of a common PSFCH resource according to an embodiment of the present disclosure. In FIG. 4, a resource pool includes two RB sets. In this case, a common PSFCH resource combination includes two RBs, with one in an RB set 0, and the other in an RB set 1. FIG. 5 is another diagram of a common PSFCH resource according to an embodiment of the present disclosure. A common PSFCH resource in FIG. 5 includes PRB resources on interlaces 0 in two RB sets in a resource pool.

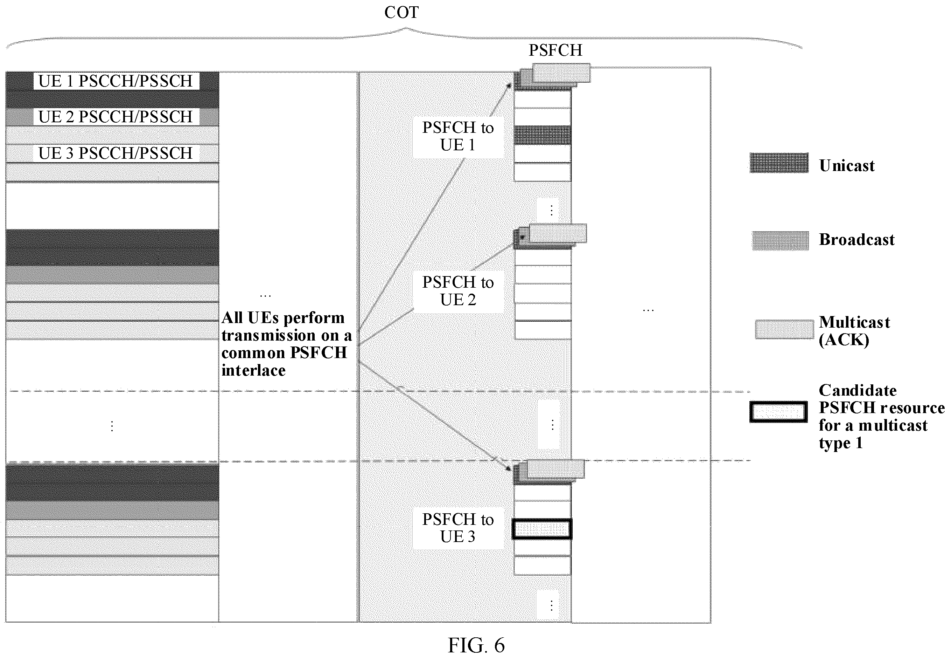

FIG. 6 is a diagram of PSFCH transmission of each service type according to an embodiment of the present disclosure. Data is transmitted by using an interlace (interlace) structure in a resource pool. A PSSCH transmitted by UE 1 is of a unicast type. Therefore, receive end UE (that is, UE that receives the PSSCH transmission of the unicast type) corresponding to the UE 1 not only needs to send a first signal on a common PSFCH interlace, but also needs to send feedback information on a dedicate PSFCH. However, UE 2 transmits a service of a broadcast type, and no feed back information is needed. Therefore, receive end UE corresponding to the UE 2 only needs to transmit a first signal on a common PSFCH. For a multicast type 1 transmitted by UE 3, only receive end UE whose receiving state is a NACK needs to perform feedback. Therefore, if a receiving status corresponding to data received by receive end UE corresponding to the UE 3 is an ACK, a first signal needs to be sent only on a common PSFCH interlace. If a receiving status corresponding to data received by the receive end UE is a NACK, the RX UE needs to send a signal on both a common interlace and a dedicate PSFCH. Specifically, the RX UE sends a first signal on the common interlace, and sends feedback information on the dedicate PSFCH. When valid feedback information is present, a signal (that is, the feedback information) sent on the dedicate PSFCH resource is used by the transmit end UE (or referred to as TX UE, which is an example of the second terminal apparatus) to determine a PSSCH receiving status. To be specific, the receive end UE (or referred to as RX UE) needs to feed back the PSSCH receiving status on the dedicate PSFCH resource. A signal (that is, the first signal) on the common interlace may represent a receiving status of a corresponding PSSCH, may also be other data or another signal. FIG. 7 is a diagram of an interlace (interlace) structure according to an embodiment of the present disclosure. As shown in FIG. 7, for a 15 kHz SCS, there are 10 interlaces, and each interlace uses a $10^{th}$ PRB. When the subcarrier spacing is 15 kHz, M=10. When the subcarrier spacing is 30 kHz, M=5.

As described above, a common PSFCH resource may include RB resources of multiple RB sets in a resource pool, and PSSCH transmission does not necessarily occupy the entire resource pool. However, LBT needs to be performed (if required) before data occurs. That is, a larger transmission bandwidth indicates a higher requirement for LBT. A main purpose of transmission on the common PSFCH resource is to ensure that a COT is not lost, and to meet an OCB requirement in some regions. Therefore, in this embodiment of the present disclosure, use of the common PSFCH resource may be based on some criteria. Specifically, the common PSFCH resource may cross multiple RB sets, but LBT needs to be performed for sending information. At least one of the following criteria may be considered:

RX UE performs sending on all RBs on the common PSFCH resource. Under this criterion, regardless of a quantity of RB sets on which RBs included in the common PSFCH resource set are distributed, the RX UE needs to perform sending on these common PSFCH resources.

The RX UE performs sending only on a common PSFCH resource in an RB set in which a PSSCH is located. For example, in FIG. 4 and FIG. 5, the UE 1 sends information to the UE 2 in an RB set 0, and the RX UE 2 needs to send information on a common PSFCH resource included in the RB set 0 in which the PSSCH is located.

The RX UE performs sending on a common PSFCH resource in an RB set in which a dedicate PSFCH (if present) is located. For example, in FIG. 4 and FIG. 5, the UE 1 sends information to the UE 2 on the RB set 0, and a corresponding dedicated feedback resource is in the RB set 0. Therefore, the RX UE 2 needs to send information on a resource included in the RB set 0 in which the dedicated PSFCH resource is located.

The RX UE performs sending on a common PSFCH resource in an RB set included in a shared COT. For example, in FIG. 4 and FIG. 5, the UE 1 initiates a COT in the RB set 0, and then the UE 1 sends information to the UE 2 in the RB set 0. The COT initiator UE 1 may indicate, in the RB set 0, the UE 2 to perform PSFCH feedback by using LBT type2. Therefore, the RX UE 2 needs to send information on a common PSFCH resource in the RB set 0.

In some embodiments, a resource block in the first feedback resource corresponds to a bit value that is indicated in the first bitmap and that is used to send feedback information. In some embodiments, a subcarrier spacing corresponding to the first feedback resource is 60 kHz. In the first bitmap, a value 0 indicates that a corresponding PRB (physical resource block) is not used for PSFCH sending and receiving, and a value 1 indicates that a corresponding PRB (physical resource block) is used for PSFCH sending and receiving. In other words, 1 indicates that a corresponding resource block is used for sending of feedback information, and 0 indicates that a corresponding resource block is not used for sending of feedback information. In some other embodiments, 1 indicates that a corresponding resource block is not used for sending of feedback information, and 0 indicates that a corresponding resource block is used for sending of feedback information. In some embodiments, a quantity of 0s or 1s that are indicated in the first bitmap and that are used for sending of feedback information is greater than a preset value.

In a region with an OCB regulation requirement, interlace transmission is one of methods for meeting an OCB requirement. For a 60 kHz SCS (subcarrier spacing) configuration, an interlace (interlace) structure for the 60 kHz SCS (subcarrier spacing) configuration is not supported in NRU. Therefore, for 60 kHz, the interlace structure cannot be used to meet the OCB regulation requirement. When there is no interlace structure, the common interlace method above is no longer applicable. Therefore, in some embodiments of this disclosure, a bitmap set is defined to achieve an effect similar to that of the common interlace. The bitmap set, that is, the first bitmap, is used to define a PRB resource of the common PSFCH. A length of the bitmap is equal to a quantity of RBs in the resource pool, that is, bit (bit) values are in a one-to-one correspondence with RBs in the resource pool. In some embodiments, in the first bitmap, a bit value being 1 indicates that the PRB is used for the common PSFCH, and a bit value being 0 indicates that the value is not used for the common PSFCH. In some other embodiments, a bit value being 0 indicates that the PRB is used for the common PSFCH, and a bit value being 1 indicates that the value is not used for the common PSFCH. From a perspective of a receive end user, it is better that 1s and 0s in the bitmap set are distributed alternately in an RB set, that is, intervals between "1"s in the bitmap are equal. In addition, to meet the OCB requirement, a quantity of bit values that are indicated and that are used for the common PSFCH needs to be greater than a preset value, that is, a quantity of 0s or 1s that are indicated and that are used to send the first feedback information is greater than the preset value. For example, if a bit value being 1 indicates that the PRB is used for the common PSFCH, a quantity of "1"s in the bitmap is greater than or equal to 10. From a perspective of simple implementation, when a resource pool includes multiple RB sets, bitmap values configured on an RB set may be a copy of another RB set.

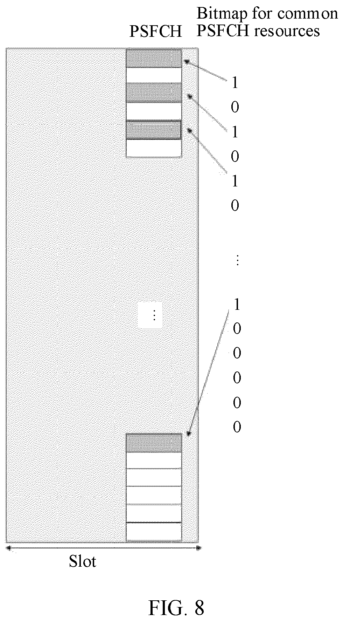

As shown in FIG. 6, it is assumed that the resource pool includes only one RB set, and a 1st bit value of the bitmap is "1 ", followed by 0, and repetition is performed in a manner of "1010...... ", so that in the RB set, a quantity of RBs representing common PSFCH resources is greater than or equal to 10. For example, it is assumed that one RB set in the resource pool has 24 RBs. In this case, a bitmap configuration may be " 101010101010101010100000", that is, values of 10 of the first 20 bits are "1"s, and values of the remaining bits are all 0s. Certainly, the bitmap value may also start from 0, that is, "010101010101010101010000", provided that values of N bits of 2N (N≥10) bits in the bitmap are "1"s. FIG. 8 is a diagram of representing common PSFCH resources in a resource pool by using a bitmap according to some embodiments of the present disclosure. FIG. 8 shows an example in which a position of "1" in the bitmap is used for a common PSFCH resource.

In some embodiments, an "sl-PSFCH-RB-Set" bitmap is used to represent resources used for HARQ-ACK transmission, and a PRB resource corresponding to a bit value 1 in the bitmap may be used for HARQ-ACK feedback. An "sl-RB-SetPSFCH" bitmap is used to represent scheme 2 conflict indication. 1 in the bitmap indicates that a corresponding PRB resource may be used for scheme 2 conflict indication. Therefore, in some embodiments, a position of the bit value 1 in the bitmap used for the common PSFCH resource should not overlap a position of the bit value 1 in the "sl-PSFCH-RB-Set" and the "sl-RB-SetPSFCH".

In addition, in some embodiments, when transmission of one UE occupies multiple sub-channels (sub-channel), a parameter sl-PSFCH-CandidateResourceType may be configured, so that PSFCH feedback is limited to a start sub-channel occupied by PSSCH transmission, or PSSCH data on each sub-channel corresponds to PSFCH feedback corresponding to the sub-channel. As an optional implementation, on the unlicensed frequency band, when a PSSCH and a feedback PSFCH resource corresponding to the PSSCH are in a same RB set, a limitation that sl-PSFCH-Candidate-teResourceType = allocSubCH should be made, that is, $N_{\text{type}}^{\text{PSFCH}} = N_{\text{subch}}^{\text{PSSCH}}$ in this case. In this case, when one transport block occupies sub-channels in multiple RB sets, it can be ensured that PSFCH transmission is performed in different RB sets. Therefore, even if there is no common interlace resource, it can be ensured that a COT in which a PSSCH is located is not lost.

A time-frequency resource for sidelink communication is configured based on an SL communication resource pool. The SL communication resource pool may be considered as a set of time resources and frequency resources used for SL communication. For a time resource, a base station uses a bitmap and periodically repeats the bitmap to indicate a set of subframes used for SL communication in all subframes in a system. In NR SL, an available subframe for SL communication is indicated by using the bitmap. For example, a quantity of symbols occupied by SL transmission in each subframe is fixed at M symbols, and M is defined as one SL time domain transmission duration or a time domain transmission unit.

For a frequency resource in the SL communication resource pool, a base station divides a frequency band used for SL communication into several sub-channels, and each sub-channel includes a particular quantity of resource blocks. The base station may indicate a sequence number of a 1st resource block of a frequency resource used for SL communication, a total quantity N of sub-channels included in the communication resource pool, and a quantity nCH of resource blocks included in each sub-channel. One SL transmission may occupy one or more sub-channels. When an SL communication resource is scheduled, scheduling in frequency domain is performed at a granularity of sub-channel.

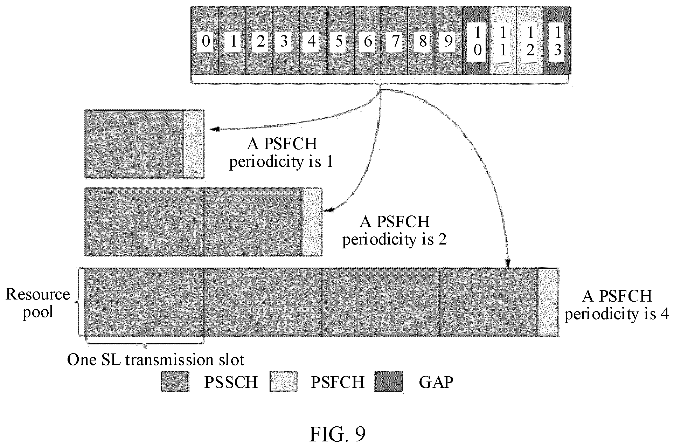

NR-V2X supports physical layer HARQ-ACK feedback. To be specific, for one PSSCH transmission, if transmit end user equipment carries HARQ-ACK feedback enabling information in control information, receive end user equipment needs to feed back, based on a PSSCH decoding result, ACK/NACK information as a response, where the ACK/NACK information is transmitted over a PSFCH channel. A PSFCH channel resource is a periodic resource configured in the resource pool, and a periodicity configuration parameter $N_{\mathrm{PSSCH}}^{\mathrm{PSFCH}}$ of the PSFCH channel resource may be 0, 1, 2, or 4. $N_{\mathrm{PSSCH}}^{\mathrm{PSFCH}} = 0$ indicates that there is no PSFCH resource configured in the resource pool, and PSFCH sending is not enabled in the resource, that is, physical layer HARQ feedback is not supported. $N_{\mathrm{PSSCH}}^{\mathrm{PSFCH}} = 1,2,4$ indicates that there is one PSFCH feedback slot every $N_{\mathrm{PSSCH}}^{\mathrm{PSFCH}}$ SL slots in a time window. FIG. 9 is a diagram of a PSFCH resource configuration in a resource pool. As shown in FIG. 9, in a slot in which a physical resource of a PSFCH is located, the PSFCH occupies the last two symbols before a gap.

It can be learned from FIG. 9 that, if a PSFCH feedback resource is configured in the resource pool, the PSFCH feedback resource is configured once every N slots. In a scenario of a V2X transmission mode 2, different from base station scheduling, a user need to select a PSSCH sending resource based on a sensing result of the user. To simplify a PSFCH resource selection process, NR-V2X configures a PSFCH feedback resource for each PSSCH sub-channel. A specific process of determining a PSFCH resource corresponding to each sub-channel is as follows:

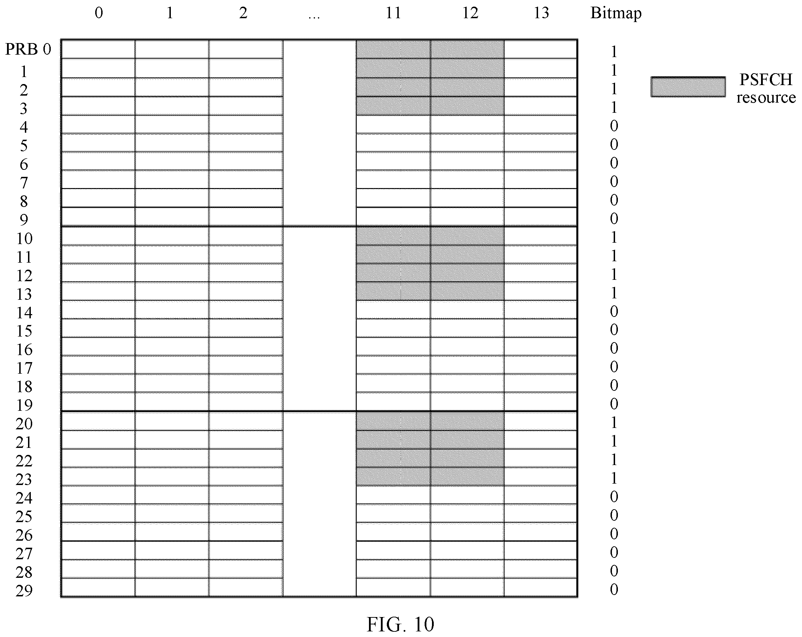

A bitmap (bitmap) of a PSFCH frequency domain resource is configured for the resource pool, to indicate whether a specific PRB on a frequency domain resource in which the resource pool is located can be used as a PSFCH resource. To be specific, a length of bit information included in the bitmap is equal to a quantity of PRBs in the resource pool. 1 in the bitmap indicates that a corresponding PRB can be used for PSFCH transmission, and a bit 0 indicates that a corresponding PRB resource cannot be used for PSFCH transmission. Particularly, the PSFCH resource may be used for HARQ-ACK transmission, and a resource of the HARQ-ACK transmission is represented by a "sl-PSFCH-RB-Set" bitmap. A bit value 1 in the bitmap indicates that a corresponding PRB can be used for HARQ-ACK feedback. The PSFCH resource may also be used for scheme 2 conflict indication, and a resource of the scheme 2 conflict indication is represented by a "sl-RB-SetPSFCH" bitmap. 1 in the bitmap indicates that a corresponding PRB resource may be used for scheme 2 conflict indication. It should be noted that, a position of the bit value 1 in "sl-PSFCH-RB-Set" does not overlap a position of the bit value 1 in "sl-RB-SetPSFCH". FIG. 10 is a diagram of a bitmap indication for PSFCH resources. In a slot having a PSFCH transmission resource, assuming that one sub-channel includes 10 PRBs and a resource pool has three sub-channels in total, a bitmap indicating PSFCH frequency domain resources in the resource pool includes 3×10=30 bits in total to indicate whether each PRB can be used for PSFCH transmission. As shown in FIG. 10, a bitmap indicates that the first four PRBs of each sub-channel may be used for PSFCH feedback. The bitmap may be used to indicate the HARQ-ACK resource, or may be used to indicate the scheme 2 conflict resource.

Because every N PSSCH slots correspond to one PSFCH feedback slot, for a resource pool including $N_{\mathrm{subch}}$ sub-channels, a quantity of PSFCH feedback resources corresponding to each sub-channel is $M_{subch,\mathrm{slot}}^{PSFCH} = M_{PRB,\,\mathrm{set}}^{PSFCH} / (N_{subch} \cdot N_{PSSCH}^{PSFCH})$, where $M_{\mathrm{PRB,set}}^{\mathrm{PSFCH}}$ represents a quantity of PRBs of a PSFCH frequency domain resource, that is, indicates a total quantity of bits whose value is 1 in a bitmap of the PSFCH frequency domain resource.

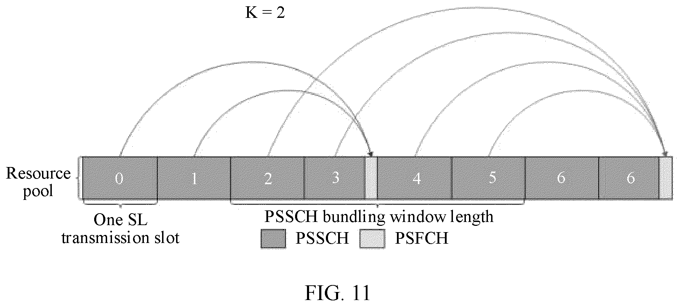

Considering a limitation of a decoding capability of the receive end user equipment, the receive end user equipment cannot immediately perform feedback after receiving a PSSCH. Therefore, a time interval K for PSSCH feedback is defined in a standard. To be specific, a PSFCH is transmitted, for the PSSCH, in a 1st available slot including a PSFCH resource. The slot and a slot in which the PSSCH is located are spaced by at least K slots, where a value of K is configured by the resource pool. FIG. 11 is a diagram in which a PSSCH corresponds to a PSFCH time domain resource according to an embodiment of the present disclosure. When K=2, for PSSCHs carried in slots 0 and 1, feedback may be performed on a PSFCH resource in a slot 3, and for PSSCHs carried in slots 2, 3, 4, and 5, feedback is performed on a PSFCH resource in a slot 7. In addition, because feedback for the slots 2, 3, 4, and 5 is performed on the PSFCH resource in one slot, the slots 2, 3, 4, and 5 may be referred to as a PSSCH bundling window length.

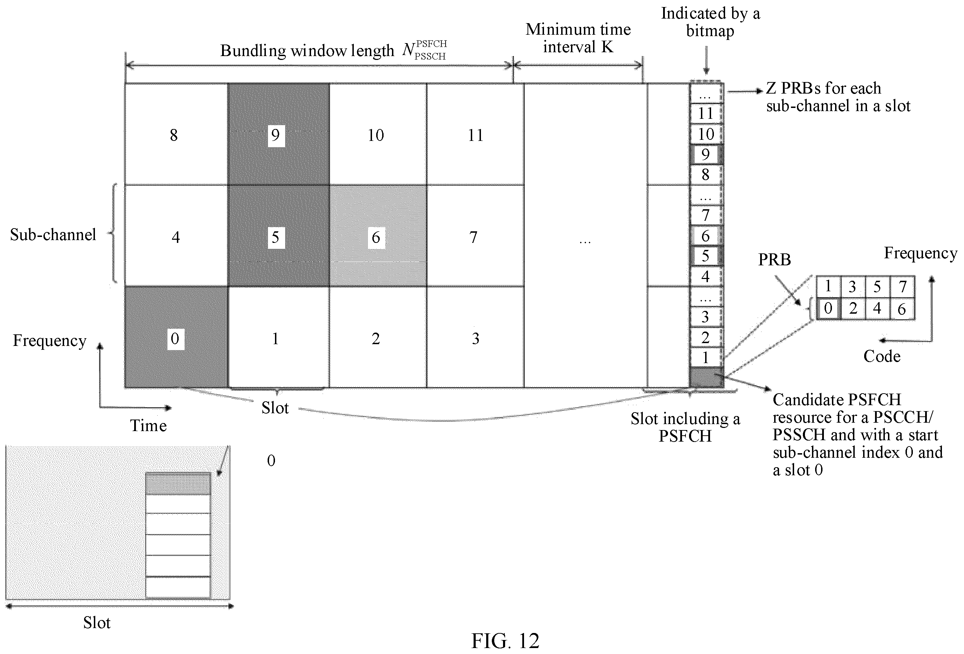

Available PSFCH resources in a PSFCH feedback slot are allocated, in time domain first and then in frequency domain, to each sub-channel in a feedback periodicity. Details are shown in FIG. 12. FIG. 12 is a diagram of PSFCH frequency domain resource allocation. When $N_{\text{PSSCH}}^{\text{PSFCH}} = 4$, for four bundled PSSCH slots, a PSFCH resource corresponding to each sub-channel is shown by a number in FIG. 12, that is, a PSFCH feedback resource of one PRB is allocated to each sub-channel in each slot. Using a formula for representation, for an $i^{\text{th}}$ slot in N bundled PSSCH slots, if a frequency domain sub-channel number in a resource pool is j, a corresponding PSFCH resource is

$$[(i + j \cdot N_{\text{PSSCH}}^{\text{PSFCH}}) \cdot M_{\text{subch,slot}}^{\text{PSFCH}}, (i + 1 + j \cdot N_{\text{PSSCH}}^{\text{PSFCH}}) \cdot M_{\text{subch,slot}}^{\text{PSFCH}} - 1]$$

. If a user occupies two sub-channels for transmission, for PSSCHs corresponding to "5" and "9" in FIG. 12, PSFCH resources corresponding to the PSSCHs are also 5 and 9 respectively, and are discontiguous in frequency domain.

For a PSFCH format 0, a design that meets an OCB requirement is to introduce a common PSFCH resource. The common PSFCH resource may be a common interlace or other common PRBs. A common interlace structure is defined in a resource pool, and then a user in the resource pool transmits corresponding HARQ feedback information on another non-common PSFCH resource according to a PSSCH-PSFCH mapping rule of R16/R17.

According to embodiments of the present disclosure, a problem of a lost COT caused when no PSFCH transmission is present in a slot for PSFCH transmission is resolved. The common interlace structure is defined, and then it is limited that RX UE performs sending on the common interlace for some services or all service types, to address an OCB issue and avoid the problem of a lost COT. Because an interlace structure for 60 kHz is currently not defined in NRU, a design in embodiments of the present disclosure addresses an issue that PSFCH transmission meets OCB regulations without the interlace structure.

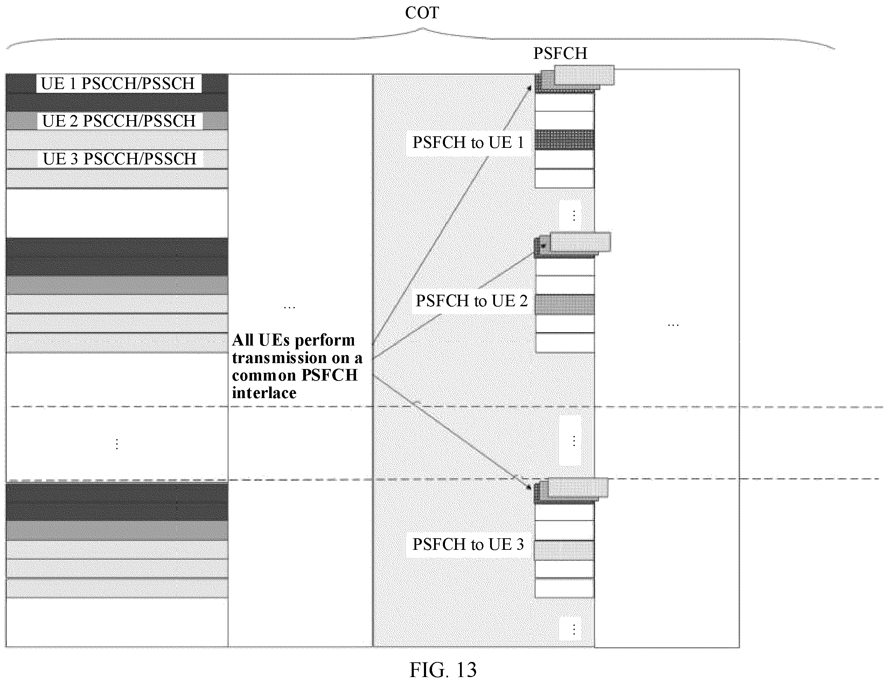

FIG. 13 is diagram of a common interlace structure for a PSFCH format 0. UE 1, UE 2, and UE 3 perform PSCCH/PSSCH transmission in a slot in a COT. However, a corresponding structure UE does not need to perform feedback on a PRB resource dedicated for PSFCH transmission, and needs to send a signal on a common interlace, to meet an OCB requirement.

For a PSFCH sequence generation manner in embodiments of the present disclosure, specifically, the PSFCH is a ZC sequence based on a low peak-to-average ratio, occupies two consecutive OFDM symbols in time domain, and occupies one PRB in frequency domain. A specific generation manner is generating a basic sequence $r(n)$, $0 \leq n < M_{ZC}$ based on a sequence length, performing phase rotation on the basic sequence r(n), and generating a reusable sequence of a low peak-to-average ratio in the following manner:

$$r^{\alpha}(n) = r * e^{jan}, 0 \leq n < M_{ZC}$$

$M_{ZC}$ = 12, that is, that multiple users use different $\alpha$ to generate PSFCH sequences that can be distinguished is supported, and each PSFCH sequence is code-division multiplexed on one RB for sending. Because the UE needs to feed back ACK and NACK information, that is, at least two sequences are allocated to one user, which correspond to different $\alpha$ values. The phase rotation value $\alpha$ is determined by using the following formula:

$$\alpha_l = \frac{2\pi}{N_{\text{sc}}^{\text{RB}}} \left( \left( m_0 + m_{\text{cs}} + n_{\text{cs}}(n_{\text{s,f}}^{\mu}, l + l') \right) \mod N_{\text{sc}}^{\text{RB}} \right)$$

$N_{sc}^{RB}$ represents a quantity of subcarriers in an RB, and the value is defined as 12 in NR; $n_{s,f}^{\mu}$ represents a slot number (slot number) corresponding to a current subcarrier spacing $\mu$ in a radio frame; $l$ represents a number of an OFDM symbol in a PSFCH transmission slot, $l$ = 0 represents a 1st OFDM symbol of a current PSFCH transmission resource; and $l'$ represents a symbol index relative to the 1st OFDM symbol on the current PSFCH transmission resource. $m_0$ represents a phase of an ACK in a PSFCH feedback resource pair, and $m_{cs}$ represents a phase offset of a NACK sequence relative to the ACK sequence in the PSFCH feedback resource pair. NR-V2X supports physical layer PSFCH feedback in unicast and multicast scenarios. For different service types, a value of $m_{cs}$ is determined according to Table 2 and Table 3. Table 2 is a phase mapping relationship of a PSFCH feedback sequence pair in unicast and multicast type 2 scenarios, and Table 3 is a mapping relationship of HARQ information of a PUCCH format 0 having an SR request in a multicast type 1 scenario.

Table 2

| HARQ-ACK value | 0 | 1 |
|---|---|---|
| Sequence cyclic shift | $m_{CS} = 0$ | $m_{CS} = 6$ |

Table 3

| HARQ-ACK value | 0 | 1 |
|---|---|---|
| Sequence cyclic shift | $m_{CS} = 0$ | N/A |

The function $n_{cs}(n_c, l)$ is represented as

$$n_{cs}\left(n_{s,f}^{\mu}, l\right) = \sum_{m=0}^{7} 2^m c\left(8N_{symb}^{slot} n_{s,f}^{\mu} + 8l + m\right)$$

c(i) represents a value of a sequence number i in a pseudo-random sequence, and a generation process is shown in the following; $N_{symb}^{slot}$ represents a quantity of consecutive time domain symbols in one slot, and the value is 14; and an initial value for generating the pseudo-random sequence is $c_{init} = n_{ID}$, where $n_{ID}$ is configured by a higher layer, and is 0 if the higher layer does not configure the initial value.

A pseudo-random sequence $c(n)$ whose length is $M_{PN}$ is generated by performing cyclic shift on a gold sequence whose length is 31, where $n = 0,1,..., M_{PN} - 1$. The gold sequence includes two m sequences x1(n) and x2(n). A generation process is as follows:

$$c(n) = \left(x_1(n + N_C) + x_2(n + N_C)\right) \bmod 2$$

$$x_1(n + 31) = \left(x_1(n + 3) + x_1(n)\right) \bmod 2$$

$$x_2(n + 31) = \left(x_2(n + 3) + x_2(n + 2) + x_2(n + 1) + x_2(n)\right) \bmod 2$$

$N_C = 1600$, $x_1(0) = 1$, $x_1(n) = 0$, $n = 1,2,...,30$, and $x_2(n)$ is determined through $c_{init} = \sum_{i=0}^{30} x_2(i) \cdot 2^i$.

The following describes the position of the PSFCH resource. If one PSSCH occupies $N_{subch}^{PSSCH}$ sub-channels, the PSSCH corresponds to $N_{subch}^{PSSCH} \cdot M_{subch,slot}^{PSFCH} \cdot N_{CS}^{PSFCH}$ PSFCH feedback resource pairs, where $N_{CS}^{PSFCH}$ represents a quantity of PSFCH sequence pairs that can be multiplexed on a PSFCH resource of one PRB configured in a resource pool, and $M_{subch,slot}^{PSFCH}$ represents a quantity of PRBs of a PSFCH resource allocated to each sub-channel. In addition, the resource pool may further limit, by configuring $N_{type}^{PSFCH}$, a PSFCH feedback resource that can be used by receive end user equipment of the PSSCH.

In some embodiments, if the resource pool configures $N_{type}^{PSFCH} = 1$, the receive end user equipment of the PSSCH can use only a PSFCH resource corresponding to a 1st sub-channel of the PSSCH, that is, $R_{PRB,CS}^{PSFCH} = M_{subch,slot}^{PSFCH} \cdot N_{CS}^{PSFCH}$. As shown in FIG. 12, when the PSSCH occupies two sub-channels numbered 5 and 9 for data transmission, the receive end user of the PSSCH can only use the PSFCH resource numbered 5 for feedback.

In some other embodiments, if the resource pool configures $N_{type}^{PSFCH} = N_{subch}^{PSSCH}$, the receive end user equipment of the PSSCH may perform feedback by using PSFCH resources corresponding to all sub-channels of the PSSCH, that is, $R_{\mathrm{PRB},CS}^{\mathrm{PSFCH}} = N_{\mathrm{subch}}^{\mathrm{PSSCH}} \cdot M_{\mathrm{subch},slot}^{\mathrm{PSFCH}} \cdot N_{\mathrm{CS}}^{\mathrm{PSFCH}}$ .

The transmit end user equipment selects a resource corresponding to a $(P_{\mathrm{ID}} + M_{ID}) mod R_{\mathrm{PRB},CS}^{\mathrm{PSFCH}}{}^{\mathrm{th}}$ PSFCH resource pair to feed back a PSFCH, where $P_{\mathrm{ID}}$ represents a physical layer source address ID carried in control information, and for the multicast type 2, $M_{ID}$ is an ID configured by a higher layer of each receive end user equipment for current PSSCH information transfer. Otherwise, $M_{ID} = 0$. For $R_{\mathrm{PRB},CS}^{\mathrm{PSFCH}}$ PSFCH resource pairs, all PSFCH sequences are arranged in ascending order of frequency domain indexes first and then code domain indexes, that is, a PRB index corresponding to PSFCH feedback is $((P_{\mathrm{ID}} + M_{ID}) mod R_{\mathrm{PRB},CS}^{\mathrm{PSFCH}}) mod \left(R_{\mathrm{PRB},CS}^{\mathrm{PSFCH}} / \left(N_{\mathrm{CS}}^{\mathrm{PSFCH}} * N_{\mathrm{type}}^{\mathrm{PSFCH}}\right)\right)$ , and in the PRB, the PSFCH feedback corresponds to a cyclic shift index Cyclic Shift Pair

$$\mathrm{Index} = \left\lfloor \left((P_{\mathrm{ID}} + M_{ID}) mod R_{\mathrm{PRB},CS}^{\mathrm{PSFCH}}\right) / \left(R_{\mathrm{PRB},CS}^{\mathrm{PSFCH}} / \left(N_{\mathrm{CS}}^{\mathrm{PSFCH}} * N_{\mathrm{type}}^{\mathrm{PSFCH}}\right)\right) \right\rfloor$$

, and $m_0$ for PSFCH feedback sequence generation is determined according to Table 4.

Table 4

| $N_{\mathrm{CS}}^{\mathrm{PSFCH}}$ | $m_0$ | | | | | |
| --- | --- | --- | --- | --- | --- | --- |
| | Cyclic Shift Pair Index 0 | Cyclic Shift Pair Index 1 | Cyclic Shift Pair Index 2 | Cyclic Shift Pair Index 3 | Cyclic Shift Pair Index 4 | Cyclic Shift Pair Index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

It can be seen from the foregoing analysis that, due to different $M_{ID}$, for the multicast type 2, each user in the group uses a different PSFCH resource pair for feedback, and the transmit end user correspondingly receives each resource pair respectively (the prerequisite is that $M_{ID}$ of each user in the group is known to all members in the group). For the multicast type 1, because $M_{ID} = 0$, for a PSSCH whose source address $P_{\mathrm{ID}}$ is determined, each member in the group uses the same PSFCH to feed back NACK information.

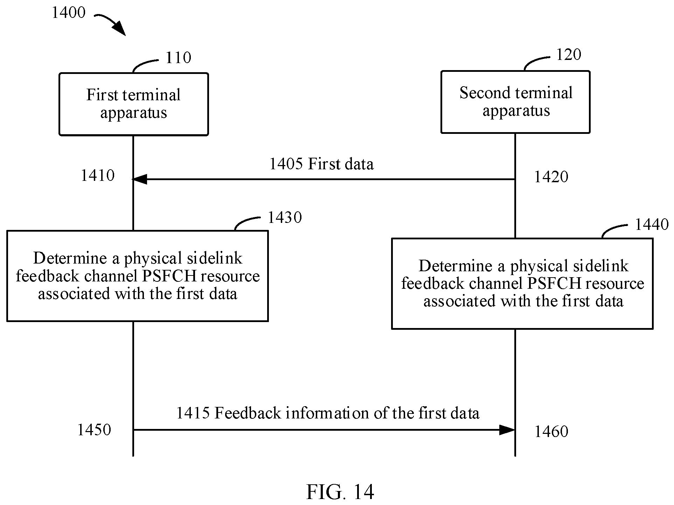

FIG. 14 is another example schematic flowchart of a communication method according to an embodiment of this application. As shown in FIG. 14, on a side of a first terminal apparatus, the first terminal apparatus receives (1410) first data 1405 from a second terminal apparatus; the first terminal apparatus determines (1430) a physical sidelink feedback channel PSFCH resource associated with the first data; and if the PSFCH resource belongs to a first channel occupancy time COT in time domain, the first terminal apparatus sends (1450) feedback information 1415 corresponding to the first data to the second terminal apparatus on the PSFCH resource, where the first COT is initiated by the first terminal apparatus; or if the PSFCH resource does not belong to the first COT in time domain, the first terminal apparatus sends (1450) the feedback information 1415 of the first data in a second COT or a third COT, where the second COT is a COT initiated by the second terminal apparatus, and the third COT is a COT initiated by the first terminal apparatus.

On a side of a second terminal apparatus, the second terminal apparatus sends (1420) first data 1405 to a first terminal apparatus; the second terminal apparatus determines (1440) a physical sidelink feedback channel PSFCH resource associated with the first data; and if the PSFCH resource belongs to a first channel occupancy time COT in time domain, the second terminal apparatus receives (1460) feedback information 1415 corresponding to the first data on the PSFCH resource, where the first COT is initiated by the first terminal apparatus; or if the PSFCH resource does not belong to the first COT in time domain, the second terminal apparatus receives (1460) the feedback information 1415 of the first data in a second COT or a third COT, where the second COT is a COT initiated by the second terminal apparatus, and the third COT is a COT initiated by the first terminal apparatus.

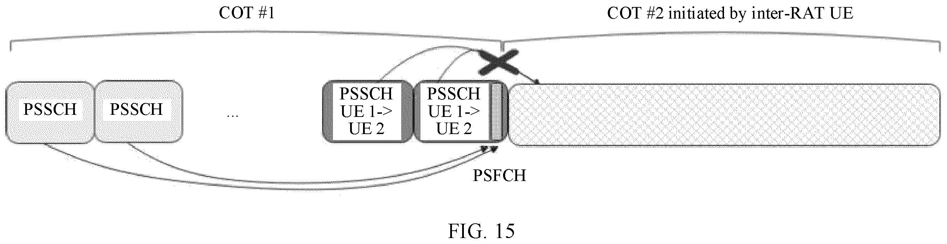

In this manner, in this embodiment of the present disclosure, failure to feed back the PSFCH in a specified manner because the COT is preempted by another UE can be avoided. A PSFCH periodicity is (pre)configured, and PSSCHs and PSFCHs are in a one-to-one correspondence according to a mapping rule. However, on an unlicensed frequency band, a terminal needs to perform an LBT operation before sending a signal. When the LBT fails, the PSSCH-PSFCH one-to-one mapping relationship is interrupted, causing PSFCH transmission failure. For an example in which a PSFCH is present periodically and an example of PSSCH-PSFCH one-to-one mapping according to a mapping rule, refer to FIG. 11 and FIG. 12. However, on an unlicensed frequency band, UE performs an LBT operation to preempt a resource. When the LBT succeeds, the UE may transmit a corresponding resource in the COT preempted by the UE. After the COT ends, if a subsequent time-frequency resource is preempted by an inter-RAT user (for example, another UE, a Wi-Fi device, or a device not defined by 3GPP), the foregoing PSSCH-PSFCH mapping rule is interrupted. FIG. 15 is a diagram of a scenario in which a PSSCH-PSFCH mapping relationship may be interrupted according to an embodiment of this disclosure. As shown in FIG. 15, after a COT #1 ends, because feedback processing takes time, a PSFCH at the end of the COT cannot be fed back in time, and a subsequent COT #2 is occupied by another inter-RAT user. As a result, the PSFCH cannot be fed back in a specified manner. However, the example procedure shown in FIG. 14 can avoid the failure to feed back the PSFCH in the specified manner because the COT is preempted by another UE.

In some embodiments, on the side of the second terminal apparatus, the second terminal apparatus sends indication information to the first terminal apparatus in the second COT. On the side of the first terminal apparatus, the first terminal apparatus receives the indication information sent by the second terminal apparatus in the second COT, where the indication information indicates the first terminal apparatus to send the feedback information on a second time-frequency resource in a time-frequency resource set in the second COT.

In some embodiments, the time-frequency resource set includes M resource blocks. The M resource blocks are determined based on a second bitmap, and/or a first frequency domain offset value, and/or a second frequency domain offset value. The second bitmap is configured by a network side, preconfigured, or specified according to a protocol. In some embodiments, a bit corresponding to a bit value 1 in the second bitmap may correspond to a PSFCH resource, indicating that a corresponding resource may be used to send feedback information. A bit corresponding to a bit value 0 indicates that a corresponding resource is not used to send feedback information. The time-frequency resource set includes a resource corresponding to a bit whose bit value is 1 in the second bitmap and that corresponds to the PSFCH resource.

In some embodiments, a frequency domain resource position of the second time-frequency resource is determined based on an order, indicated in the indication information, of the first terminal apparatus in feeding back corresponding feedback information; or a time domain resource position of the second time-frequency resource is determined based on a position of a feedback time unit and/or a time offset that are/is indicated in the indication information. The feedback time unit is, for example, a slot.

In some embodiments, the first terminal apparatus determines the order of the first terminal apparatus in feeding back the corresponding feedback information is determined based on one or more represented by an indication field in the indication information, a hybrid automatic repeat request process identifier (HARQ process ID) associated with the PSSCH, a new data indicator (NDI) associated with the PSSCH, source device (Source ID) information associated with the PSSCH, destination device (destination ID) information associated with the PSSCH, or group identifier information (for example, a group ID in the multicast type 2) associated with the PSSCH. Specifically, the order of feeding back information may be explicitly or implicitly indicated. Explicit indication is reflected as that a field (that is, the foregoing indication field) is present to directly indicate a position of the first terminal apparatus in the group, and implicit indication is reflected as an order, indicated by the second terminal apparatus, of information such as the HARQ process ID and the NDI that is related to the PSSCH.

In some embodiments, when the first data corresponds to a second multicast type, a frequency domain resource position corresponding to the first terminal apparatus is related to a first identifier that is preconfigured for each terminal apparatus and that is used for transmission of the PSSCH, or is determined based on a combination of the first identifier and a source address identifier carried in control information. The first identifier (MID) is an ID configured by a higher layer of each receive end user equipment for current PSSCH information transfer. The source address identifier carried in the control information is a PID, and is a physical layer source address ID carried in the control information. In some embodiments, a form of the combination of the first identifier and the source address identifier carried in the control information is, for example, $(P_{\mathrm{ID}} + M_{ID}) mod R_{\mathrm{PRB},CS}^{\mathrm{PSFCH}}$.

In some embodiments, the frequency domain resource position is indicated by using a bit value that is indicated in the indication information and that is used to send the feedback information across feedback time units.

Crossing feedback time units is, for example, crossing slots. In some embodiments, a time offset (time offset) is used to indicate that a PSFCH slot is used for cross-slot feedback. In this case, the slot position, indicated by the time offset, in which the cross-slot PSFCH feedback is located may overlap a (pre)configured position. For example, a PSFCH feedback periodicity may be 1. In this case, one piece of PSFCH feedback is present in each slot. To avoid a PSFCH resource conflict between (semi-)static feedback in a COT and dynamic feedback across COTs, a bitmap (referred to as the second bitmap) may be used to avoid the PSFCH resource conflict between (semi-)static feedback in a COT and dynamic feedback across COTs. For example, a bit whose bit value is 1 in the second bitmap corresponds to a PSFCH resource used for sending feedback information across feedback time units.

In some embodiments, the feedback information sent by the first terminal apparatus or received by the second terminal apparatus in the third COT is in sidelink control information, a media access control control element, or a physical sidelink shared channel PSSCH. For example, the first terminal apparatus carries, in second-stage SCI, a HARQ process ID, an NDI, a source ID, a destination ID, and ACK/NACK information of a PSSCH not received previously, and sends feedback information together with data.

In some embodiments, the feedback information sent by the first terminal apparatus or received by the second terminal apparatus in the third COT is on a channel, and a frequency domain position of the feedback information is indicated by sidelink control information. For example, the first terminal apparatus carries, on a channel, a HARQ process ID, an NDI, a source ID, a destination ID, and ACK/NACK information of a PSSCH not received previously, and the SCI indicates related information such as a start position specifically occupied by the information.

In some embodiments, the feedback information sent by the first terminal apparatus or received by the second terminal apparatus in the third COT includes: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

In some embodiments, when occupying all frequency domain resources or occupying a frequency domain resource that exceeds a preset threshold in a resource block set, on a nominal channel, or on a 20 MHz bandwidth, the second terminal apparatus indicates a PSFCH resource set in the first COT or the third COT, including a time domain position and/or a frequency domain position of a PSFCH resource in the PSFCH resource set, where the PSFCH resource set is used by the first terminal apparatus or another terminal apparatus other than the first terminal apparatus to send feedback information.

In some embodiments, the second terminal apparatus receives, in the third COT, the feedback information carried in the sidelink control information.

In some embodiments, the second terminal apparatus receives, in the third COT, the feedback information carried on the selected channel, where a start position of the feedback information on the channel is obtained based on the sidelink control information.

In some embodiments, the feedback information received by the second terminal apparatus in the third COT includes: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

In this embodiment of the present disclosure, (semi-)static feedback and dynamic feedback are combined. That is, the one-to-one mapping mechanism in the (semi-)static manner is used, implementing quick and simple feedback, and dynamic feedback is introduced, resolving a problem of mapping relationship interruption caused because a PSSCH and a PSFCH cross a COT. In this embodiment of the present disclosure, a specific time-frequency position for dynamic feedback is also designed, to ensure unambiguous dynamic feedback.

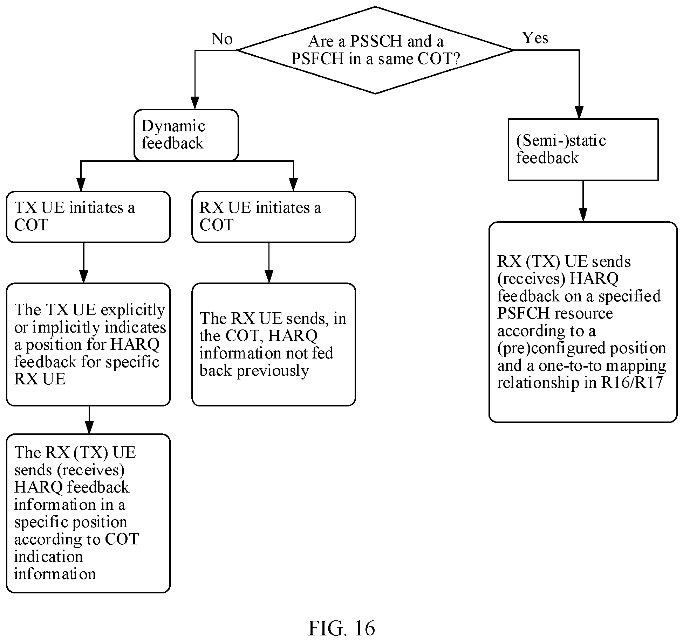

Content that corresponds to the side of the second terminal apparatus and that has been described on the side of the first terminal is not described again. Based on the foregoing description of the example procedure in FIG. 14, the following describes a HARQ feedback procedure of an SL (sidelink) device in an unlicensed frequency band. Refer to FIG. 16. FIG. 16 is an example flowchart of a communication method according to some embodiments of the present disclosure, and specifically shows a HARQ feedback procedure in an unlicensed frequency band according to an embodiment of the present disclosure. A PSFCH feedback periodicity is still configured based on a resource pool level, that is, when $N_{\text{PSSCH}}^{\text{PSFCH}} = 4$, a PSFCH feedback resource is present in a slot in every four slots. When a PSSCH and a PSFCH are in a same COT, the one-to-one mapping relationship between the PSSCH and the PSFCH in R16/R17 is still used. A COT initiator implicitly or explicitly indicates receiving UE of the PSSCH in the COT to access a channel using LBT type2 and perform feedback at a specified position. When a PSSCH and a PSFCH are not in a same COT, a dynamic feedback manner is used. That is, a feedback occasion of the PSFCH is dynamic. One is that TX UE initiates a COT, and then implicitly or explicitly indicates RX UE to perform feedback in a slot including a PSFCH. The other is that the RX UE initiates a COT, and feeds back previous feedback information in the COT of the RX UE.

The following first describes in detail a case in which the dynamic feedback manner is used and the TX UE initiates a COT. The TX UE proactively preempts a COT in a subsequent slot, and then explicitly indicates a HARQ process ID, an NDI, a source ID, a destination ID, and a specific time-frequency resource position of a PSSCH not received previously. A specific slot position is: a 1st slot of the COT + a time offset (time offset). A specific PRB of a feedback position is: a frequency offset (frequency offset) + an order indicated by the TX UE. The frequency offset may be an index offset relative to a 1st RB available for PSFCH transmission in the resource pool, or may be an index offset relative to a 1st RB available for PSFCH transmission in the COT. The order may be explicitly or implicitly indicated. Explicit indication is reflected as that a field is present to directly indicate an order of the RX UE in the group, and implicit indication is reflected as an order, indicated by the TX UE, of information such as the HARQ process ID and the NDI that is related to the PSSCH.

The RX UE performs feedback in a corresponding frequency domain position following the order and according to the foregoing rule. In some embodiments, when indicating, the TX UE should group different service type IDs. For example, the TX UE may put PSSCH information of a non-multicast type 2 (for example, including unicast, multicast type 1, and broadcast) into one group, and then combine PSSCHs representing the multicast type 2 into one group. Then, the RX UE decodes different groups to find an order of a corresponding PSSCH in the group. In some other embodiments, the TX UE may sequentially arrange the feedback information related to the PSSCH in ascending order in time domain and then in ascending order in frequency domain, and then the RX UE finds a position of the RX UE according to a service type, and then performs feedback following the order. In some embodiments, a feedback order for the multicast type 2 may be sequential feedback according to an ascending order or a descending order of MIDs, or may be feedback according to other information, for example, a corresponding position is searched for in a manner of $(P_{\text{ID}} + M_{ID}) mod R_{\text{PRB},CS}^{\text{PSFCH}}$. A principle is that members in the group can be uniquely distinguished and no conflict occurs.

When the field about the information related to the PSSCH indicated by the TX UE includes multiple multicast types 2, an implementation is to add a frequency offset 3, a frequency offset 4, ..., and the like, to indicate a feedback resource for other multicast PSSCH data. In another implementation, interval information is defined, (pre)configured, or indicated by a COT, to indicate an interval between different PSSCH transmissions of the multicast type 2.

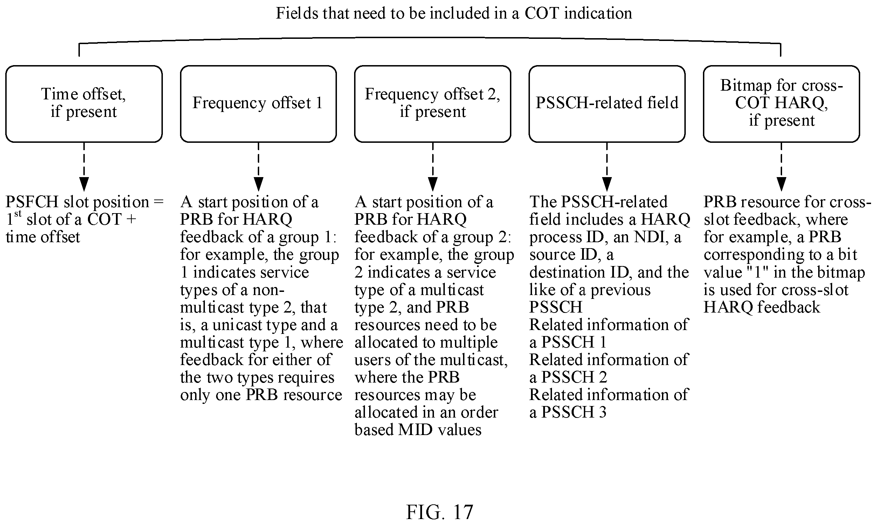

FIG. 17 shows fields that need to be included in a COT indication according to some embodiments of the present disclosure. The RX UE is the first terminal apparatus, the TX UE is the second terminal apparatus, and the COT indication is indication information sent by the second terminal apparatus to the first terminal apparatus after the second terminal apparatus occupies a COT. As shown in FIG. 17, in an example of the COT indication, fields that need to be included in the COT indication include a time offset (time offset), a frequency offset 1 (frequency offset 1), a frequency offset 2 (frequency offset 2), a PSSCH-related field, and a bitmap used for a cross-COT HARQ. A slot position of a PSFCH obtained based on the time offset is a 1st slot of the COT plus the time offset. A start position of a PRB for HARQ feedback of a group 1 is obtained based on the frequency offset 1. For example, the group 1 indicates service types of a non-multicast type 2, that is, a unicast type and a multicast type 1. Feedback for either of the two types requires only one PRB resource. A start position of a PRB for HARQ feedback of a group 2 is obtained based on the frequency offset 2. For example, the group 2 indicates a service type of a multicast type 2. In this case, PRB resources need to be allocated to multiple users of the multicast. In this case, the PRB resources may be allocated following an order of MID values. The PSSCH-related field includes a HARQ process ID, an NDI, a source ID, a destination ID, and the like of a previous PSSCH. The bitmap used for a cross-COT HARQ is specifically a PRB resource used for cross-slot feedback. For example, a PRB corresponding to a bit value "1" in the bitmap is used for cross-slot HARQ feedback.

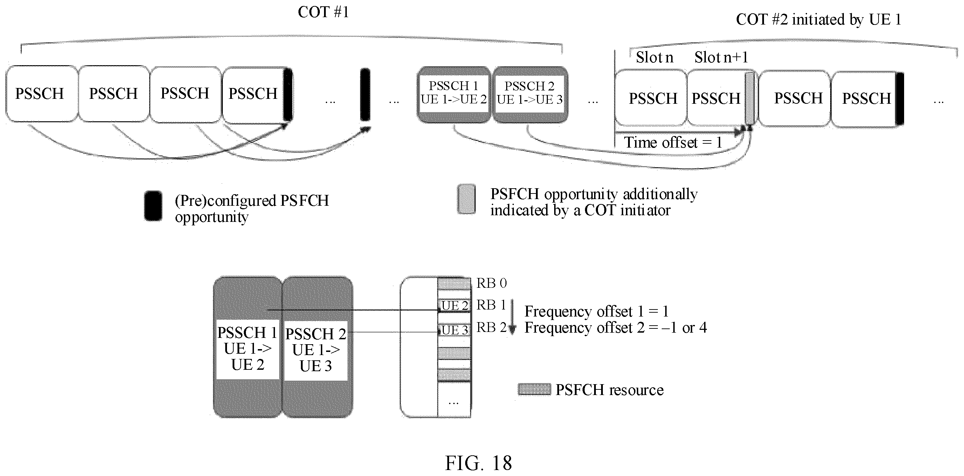

FIG. 18 is a diagram of explicitly indicating a PSFCH feedback position by TX UE according to some embodiments of the present disclosure. UE 1 separately sends data to UE 2 and UE 3 in the last two slots of a COT #1. Due to a limited processing capability of the receive end, the UE 1 cannot receive feedback information from the UE 2 and the UE 3 in time in the COT #1. In this case, the UE 1 may initiate a COT #2, and then dynamically indicate a PSFCH resource corresponding to a previous PSSCH for which feedback is not performed. In the COT#2, an original one-to-one mapping relationship has been interrupted. Therefore, the UE 1 needs to explicitly indicate "a HARQ process ID, an NDI, a source ID, and a destination ID of a previous PSSCH 1 (UE 1 to UE 2)" and "a HARQ process ID, an NDI, a source ID, and a destination ID of a previous PSSCH 2 (UE 1 to UE 3)", and a time-frequency position for corresponding PSFCH feedback. Herein, a time offset equals 2. Therefore, after receiving a COT indication, the UE 2 and the UE 3 that have not performed feedback to the UE 1 previously perform feedback in a slot n+1. If both the PSSCH 1 and the PSSCH 2 are unicast signals, the UE 2 learns, according to a frequency offset 1, that a 1st position for feedback for a group 1 is an RB 1, and the PSSCH 2 related to the UE 2 ranks first. Therefore, the UE 2 performs feedback in the position of the RB 1, and the UE 3 performs feedback on the RB 2. In this case, because there is no group 2, a frequency offset 2 equaling -1 or another value (infinity) indicates that there is no feedback for a group type 2 this time. Alternatively, the frequency offset 2 may equal a valid value such as 4, provided that frequency domain resources of the group 1 and the group 2 do not overlap.

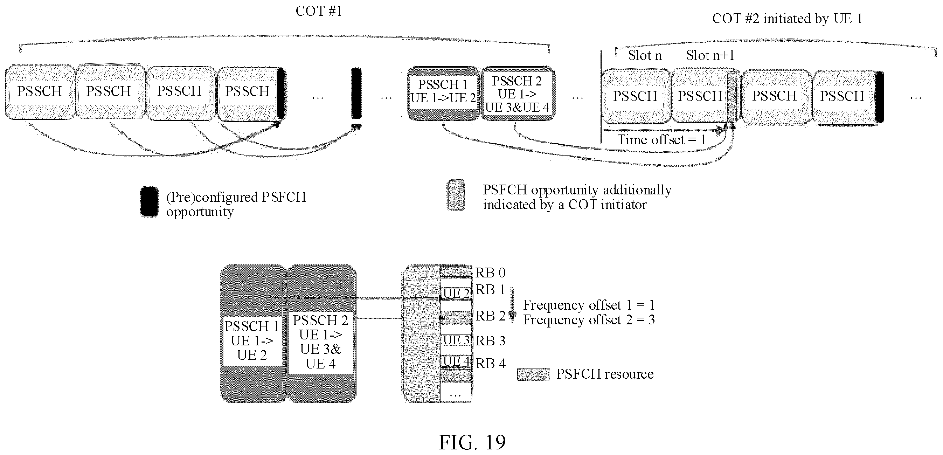

FIG. 19 is another diagram of explicitly indicating a PSFCH feedback position by TX UE according to some embodiments of the present disclosure. In this case, there are two group types. A PSSCH 1 (UE 1 to UE 2) is of a unicast type, and a PSSCH2 (UE 1 to UE 3 and UE 4) is of a multicast type 2. In this case, the UE 2 only needs to perform feedback on an RB 1 according to a frequency offset 1, and the UE 3 and the UE 4 perform feedback on an RB 3 and an RB 4 according to the frequency offset 2. Herein, a feedback order of the UE 3 and the UE 4 may be determined according to MIDs in the group. When feedback needs to be performed for a PSSCH 3 of the multicast type 2 in FIG. 19, a PRB resource between the frequency offset 2 + interval and the frequency offset 2 + 2×interval may be used feedback information transmission for the PSSCH 3.

In the foregoing embodiment, a time offset is used to indicate a PSFCH slot for cross-slot feedback. In this case, the slot position, indicated by the time offset, in which the cross-slot PSFCH feedback is located overlaps a (pre)configured position. For example, a PSFCH feedback periodicity may be 1, and in this case, one piece of PSFCH feedback is present in each slot.

To avoid a PSFCH resource conflict between (semi-)static feedback in a COT and dynamic feedback across COTs, a bitmap is introduced in some embodiments of the present disclosure. A length of the bitmap is a quantity of RBs in a resource pool, or may be RBs included only in an RB set. In this case, when generating a PSFCH resource and an RB resource in the resource pool, the UE should also skip the RB in the resource pool by default, which may be an RB in the RB set and an RB in the guard band, only with the bit value corresponding to the RB in the guard band being set to 0. That is, the guard band is not used for PSFCH feedback. An RB with a bit value "1" in the bitmap indicates that the RB is used for cross-slot PSFCH transmission, and a bit value 0 indicates that an RB is not used for cross-slot PSFCH transmission. On the contrary, an RB whose bit value is "0" in the bitmap indicates that the RB is used for cross-slot PSFCH transmission, and a bit value 1 indicates that an RB is not used for cross-slot PSFCH transmission.

When the bitmap value is included, available RB resources in FIG. 18 and FIG. 19 are indicated by the bitmap. It should be noted that, the cross-slot bitmap should be mutually exclusive with a bitmap indicating HARQ-ACK feedback and a bitmap indicating an IUC scheme 2 resource in terms of a position of "1". In other words, it should be ensured that a purpose of the resource indicated by the bitmap does not conflict with another purpose at the same time.

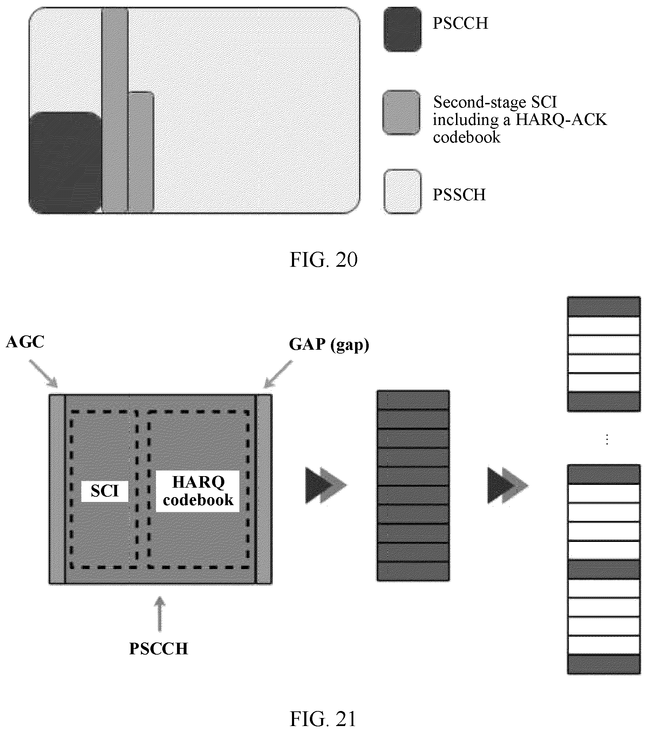

The following describes in detail a case in which the dynamic feedback manner is used and the RX UE initiates a COT For the COT initiated by the RX UE, the RX may directly send, to the TX UE, HARQ information corresponding to a PSSCH for which feedback is not performed. In some embodiments, the RX may carry, in second-stage SCI, a HARQ process ID, an NDI, a source ID, a destination ID, and ACK/NACK information of a PSSCH not received previously, and feedback is sent together with data. FIG. 20 is a diagram of sending a HARQ and data together according to some embodiments of this disclosure. If RX UE does not need to carry data, in some other embodiments, the RX may carry, on a channel, a HARQ process ID, an NDI, a source ID, a destination ID, and ACK/NACK information of a PSSCH not received previously, then, SCI indicates related information such as a start position specifically occupied by the information. FIG. 21 is a diagram of sending a HARQ and SCI together according to some embodiments of this disclosure. It can be learned from FIG. 21 that the slot structure in this embodiment of this disclosure includes only SCI and HARQ codebook information, and is a new slot structure.

In some embodiments, to meet an OCB requirement, an interlace structure may be applied, or a common interlace structure may be introduced. Particularly, for a static or semi-static feedback manner for a PSSCH and a PSFCH in a same COT and a dynamic feedback manner for a PSSCH and a PSFCH in different COTs, due to a limited decoding capability of a receive end user, the receive end user cannot immediately perform feedback after receiving a PSSCH. Therefore, a time interval K for PSSCH feedback is defined in a standard. Therefore, when a PSFCH periodicity is 1, in one COT, there are up to N=K PSFCH slots without UE feedback. When K=2/4, in one COT, there is up to N=1 PSFCH slot without UE feedback. In this case, when no user transmission is present on the PSFCH in which the N PSFCH feedback slots are located, a COT initiator (that is, a terminal apparatus that initiates a COT) may send a signal on the defined common PSFCH resource to ensure that the COT is not lost. Herein, K should be less than or equal to the HARQ process timeline. In addition, for a slot in which TX UE sends the signal on the common PSFCH resource, a slot possibly indicated by the time offset should be excluded.

Embodiments of the present disclosure are not only applicable to V2X, 5G vehicle-to-everything, self-driving, or driving assistance, but also applicable to another vehicle-to-everything or D2D network, or an LTE cellular network, a 5G cellular network, and the like.

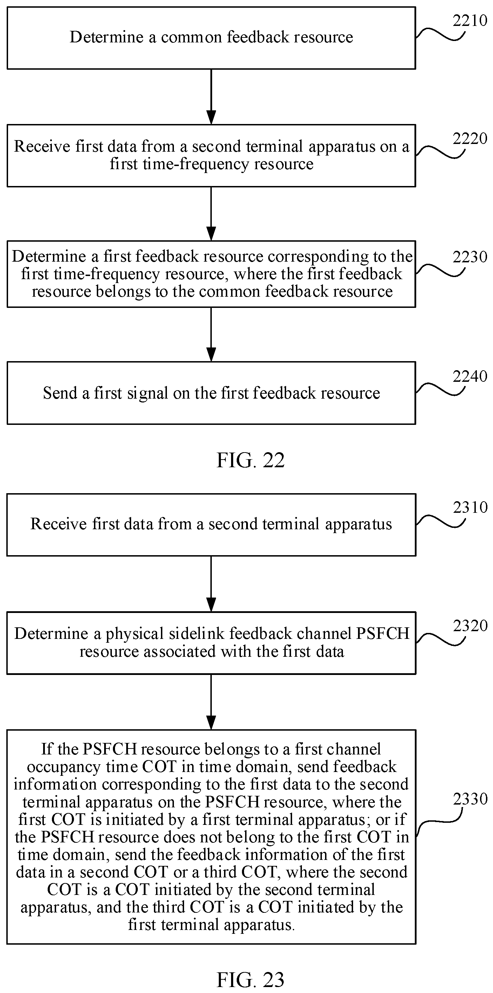

FIG. 22 is a flowchart of an implementation of some embodiments of the present disclosure at a first terminal apparatus. As shown in FIG. 22, a first terminal apparatus determines a common feedback resource (2210); the first terminal apparatus receives first data from a second terminal apparatus on a first time-frequency resource (2220); the first terminal apparatus determines a first feedback resource corresponding to the first time-frequency resource, where the first feedback resource belongs to the common feedback resource (2230); and the first terminal apparatus sends a first signal on the first feedback resource (2240).

FIG. 23 is a flowchart of an implementation of some other embodiments of the present disclosure at a first terminal apparatus. As shown in FIG. 23, a first terminal apparatus receives first data from a second terminal apparatus (2310); the first terminal apparatus determines a physical sidelink feedback channel PSFCH resource associated with the first data (2320); and if the PSFCH resource belongs to a first channel occupancy time COT in time domain, the first terminal apparatus sends feedback information corresponding to the first data to the second terminal apparatus on the PSFCH resource, where the first COT is initiated by the first terminal apparatus; or if the PSFCH resource does not belong to the first COT in time domain, the first terminal apparatus sends the feedback information of the first data in a second COT or a third COT, where the second COT is a COT initiated by the second terminal apparatus, and the third COT is a COT initiated by the first terminal apparatus (2330).

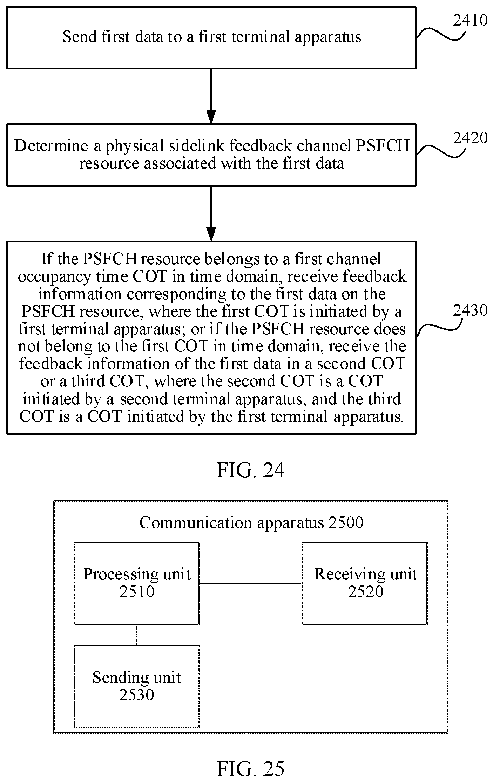

FIG. 24 is a flowchart of an implementation of some other embodiments of the present disclosure at a second terminal apparatus. As shown in FIG. 24, a second terminal apparatus sends first data to a first terminal apparatus (2410); the second terminal apparatus determines a physical sidelink feedback channel PSFCH resource associated with the first data (2420); and if the PSFCH resource belongs to a first channel occupancy time COT in time domain, the second terminal apparatus receives feedback information corresponding to the first data on the PSFCH resource, where the first COT is initiated by the first terminal apparatus; or if the PSFCH resource does not belong to the first COT in time domain, the second terminal apparatus receives the feedback information of the first data in a second COT or a third COT, where the second COT is a COT initiated by the second terminal apparatus, and the third COT is a COT initiated by the first terminal apparatus (2430).

FIG. 25 is a diagram of a structure of a possible communication apparatus according to an embodiment of this application. These communication apparatuses can implement functions of the first terminal apparatus or the second terminal apparatus in the foregoing method embodiments, and therefore can also implement beneficial effects of the foregoing method embodiments. In this embodiment of this application, the communication apparatus may be the terminal device 110 or 120 shown in FIG. 1, or may be a module (for example, a chip) used in the terminal device 110 or 120.

As shown in FIG. 25, a communication apparatus 2500 includes a processing unit 2510, a receiving unit 2520, and a sending unit 2530. The communication apparatus may be configured to implement functions of the terminal apparatus in the method embodiment shown in FIG. 2, FIG. 14, or FIG. 16. In some embodiments, the processing unit may be a processor, the sending unit may be a transmitter, and the receiving unit may be a receiver.

When the communication apparatus 2500 is configured to implement the functions of the terminal apparatus in the method embodiment shown in FIG. 2, the processing unit 2510 is configured to determine a common feedback resource; the receiving unit 2520 is configured to receive first data from a second terminal apparatus on a first time-frequency resource; the processing unit 2510 is further configured to determine a first feedback resource corresponding to the first time-frequency resource, where the first feedback resource belongs to the common feedback resource; and the sending unit 2530 is configured to send a first signal on the first feedback resource.

When the communication apparatus 2500 is configured to implement the functions of the terminal apparatus in the method embodiment shown in FIG. 14, the receiving unit 2520 is configured to receive first data from a second terminal apparatus; the processing unit 2510 is configured to determine a physical sidelink feedback channel PSFCH resource associated with the first data; and if the PSFCH resource belongs to a first channel occupancy time COT in time domain, the sending unit 2530 is configured to send feedback information corresponding to the first data to the second terminal apparatus on the PSFCH resource, where the first COT is initiated by the first terminal apparatus; or if the PSFCH resource does not belong to the first COT in time domain, the sending unit is configured to send the feedback information of the first data in a second COT or a third COT, where the second COT is a COT initiated by the second terminal apparatus, and the third COT is a COT initiated by the first terminal apparatus.

When the communication apparatus 2500 is configured to implement the functions of the terminal apparatus in the method embodiment shown in FIG. 16, the sending unit 2530 is configured to send first data to a first terminal apparatus; the processing unit 2510 is configured to determine a physical sidelink feedback channel PSFCH resource associated with the first data; and if the PSFCH resource belongs to a first channel occupancy time COT in time domain, the receiving unit 2520 is configured to receive feedback information corresponding to the first data on the PSFCH resource, where the first COT is initiated by the first terminal apparatus; or if the PSFCH resource does not belong to the first COT in time domain, the receiving unit 2520 is configured to receive the feedback information of the first data in a second COT or a third COT, where the second COT is a COT initiated by the second terminal apparatus, and the third COT is a COT initiated by the first terminal apparatus.

For more detailed descriptions of the processing unit 2510, the receiving unit 2520, and the sending unit 2530, refer to related descriptions in the foregoing method embodiments. Details are not described herein again.

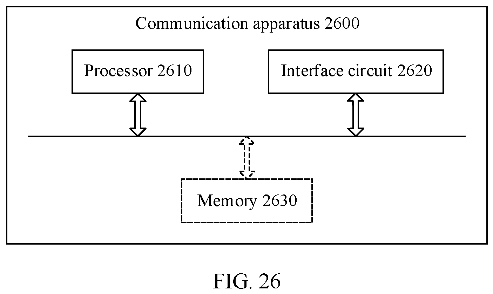

As shown in FIG. 26, a communication apparatus 2600 includes a processor 2610 and an interface circuit 2620. The processor 2610 and the interface circuit 2620 are coupled to each other. It may be understood that the interface circuit 2620 may be a transceiver or an input/output interface. Optionally, the communication apparatus 2600 may further include a memory 2630, configured to: store instructions executed by the processor 2610, store input data needed by the processor 2610 to run instructions, or store data generated after the processor 2610 runs instructions.

When the communication apparatus 2600 is configured to implement the method in the foregoing method embodiments, the processor 2610 is configured to perform the function of the foregoing processing module 602, and the interface circuit 2620 is configured to perform the functions of the foregoing receiving unit 2520 and the sending unit 2530.

When the communication apparatus is a chip used in the terminal device 110 or 120, the chip in the terminal device implements the functions of the terminal device 110 or 120 in the foregoing method embodiments. The chip in the terminal device receives information from another module (for example, a radio frequency module or an antenna) in the terminal device 110 or 120, where the information may be sent by another terminal device 110 or 120; or the chip in the terminal device sends information to another module (for example, a radio frequency module or an antenna) in the terminal device 110 or 120, where the information is sent to another terminal device 110 or 120.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

An embodiment of this application provides a communication system. The communication system may include

## EP 4 572 476 A1

the communication apparatus in the embodiment shown in FIG. 25, for example, the terminal device 110 or 120. Optionally, the terminal device 110 or 120 in the communication system may perform the communication method shown in any one of FIG. 2, FIG. 14, or FIG. 16.

An embodiment of this application further provides a circuit. The circuit may be coupled to a memory, and may be configured to perform a procedure related to the terminal device 110 or 120 or the network device 130 or 140 in any one of the foregoing method embodiments. The chip system may include the chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification is intended to include but not limited to these memories and any memory of another appropriate type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed communication method and apparatus may be implemented in other manners. For example, the described apparatus embodiment is merely an example. For example, the module division is merely logical function division and may be other division in actual implementation. For example, multiple modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The modules described as separate parts may or may not be physically separate, and parts displayed as modules may or may not be physical modules, may be located in one position, or may be distributed on multiple network units. Some or all of the units may be selected based on actual requirements to achieve the objectives of the solutions of embodiments.

In addition, functional modules in this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part that contributes, or some of the technical solutions may be implemented in a form of a software product. The computer software product is stored in a storage medium, and includes several instructions for instructing a computer device (which may be a personal computer, a server, or the network device 130 or 140) to perform all or some of the steps of the methods described in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and that can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selecting, choosing, establishing, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1.  A communication method, comprising:

    determining, by a first terminal apparatus, a common feedback resource;
    receiving, by the first terminal apparatus, first data from a second terminal apparatus on a first time-frequency resource;
    determining, by the first terminal apparatus, a first feedback resource corresponding to the first time-frequency resource, wherein the first feedback resource belongs to the common feedback resource; and
    sending, by the first terminal apparatus, a first signal on the first feedback resource.

2.  The method according to claim 1, further comprising:
    when the first data corresponds to a unicast type, sending, by the first terminal apparatus, feedback information on a second feedback resource corresponding to the first time-frequency resource, wherein the feedback information is an acknowledgment or a negative acknowledgment corresponding to the first data, and the second feedback resource does not belong to the common feedback resource.

3.  The method according to claim 1, further comprising:
    when the first data corresponds to a second multicast type, sending, by the first terminal apparatus, feedback information on a second feedback resource corresponding to the first time-frequency resource, wherein the feedback information is an acknowledgment or a negative acknowledgment for the first data, and the second feedback resource does not belong to the common feedback resource.

4.  The method according to claim 1, further comprising:

when the first data corresponds to a first multicast type, and hybrid automatic repeat request confirmation information corresponding to the first data is a negative acknowledgment, sending, by the first terminal apparatus, feedback information on a second feedback resource corresponding to the first time-frequency resource, wherein the feedback information is a negative acknowledgment for the first data.

5. The method according to any one of claims 1 to 4, wherein the first signal is the feedback information or another signal other than the feedback information.

6. The method according to claim 1, wherein the common feedback resource is used by the first terminal apparatus and another terminal apparatus other than the first terminal apparatus to send a signal.

7. The method according to claim 1, wherein a resource block in the common feedback resources is related to a first bitmap.

8. The method according to claim 7, wherein a bit whose bit value is 1 in the first bitmap corresponds to a resource block in the common feedback resource.

9. The method according to claim 8, wherein a quantity of bits that are indicated in the first bitmap and that are used to send the feedback information is greater than a preset value.

10. The method according to any one of claims 2 to 4, wherein the first feedback resource and the first time-frequency resource belong to a same resource block set, and/or the first feedback resource and the second feedback resource belong to a same resource block set.

11. A communication method, comprising:

receiving, by a first terminal apparatus, first data from a second terminal apparatus;
determining, by the first terminal apparatus, a physical sidelink feedback channel PSFCH resource associated with the first data; and
if the PSFCH resource belongs to a first channel occupancy time COT in time domain, sending, by the first terminal apparatus, feedback information corresponding to the first data to the second terminal apparatus on the PSFCH resource, wherein the first COT is initiated by the first terminal apparatus; or
if the PSFCH resource does not belong to the first COT in time domain, sending, by the first terminal apparatus, the feedback information of the first data in a second COT or a third COT, wherein the second COT is a COT initiated by the second terminal apparatus, and the third COT is a COT initiated by the first terminal apparatus.

12. The method according to claim 11, further comprising:
receiving, by the first terminal apparatus, indication information sent by the second terminal apparatus in the second COT, wherein the indication information indicates the first terminal apparatus to send the feedback information on a second time-frequency resource in a time-frequency resource set in the second COT.

13. The method according to claim 12, wherein the time-frequency resource set comprises M resource blocks, the M resource blocks are determined based on a second bitmap, and/or a first frequency domain offset value, and/or a second frequency domain offset value, the second bitmap is configured by a network side, preconfigured, or specified according to a protocol, and the time-frequency resource set comprises a resource corresponding to a bit whose bit value is 1 in the second bitmap and that corresponds to the PSFCH resource.

14. The method according to claim 12, wherein a frequency domain resource position of the second time-frequency resource is determined based on an order, indicated in the indication information, of the first terminal apparatus in feeding back corresponding feedback information; or
a time domain resource position of the second time-frequency resource is determined based on a position of a feedback time unit and/or a time offset that are/is indicated in the indication information.

15. The method according to claim 14, wherein the order of the first terminal apparatus in feeding back the corresponding feedback information is determined based on one or more represented by an indication field in the indication information, a hybrid automatic repeat request process identifier associated with a physical sidelink shared channel PSSCH, a new data indicator associated with the PSSCH, source device information associated with the PSSCH, destination device information associated with the PSSCH, or group identifier information associated with the PSSCH.

16. The method according to claim 15, wherein when the first data corresponds to a second multicast type, a frequency domain resource position corresponding to the first terminal apparatus is related to a first identifier that is preconfigured for each terminal apparatus and that is used for transmission of the PSSCH, or is determined based on a combination of the first identifier and a source address identifier in control information.

17. The method according to claim 14, further comprising:
determining the frequency domain resource position based on a bit value that is indicated in the indication information and that is used to send the feedback information across feedback time units.

18. The method according to claim 13, wherein the feedback information sent in the third COT is in sidelink control information, a media access control control element, or a physical sidelink shared channel PSSCH.

19. The method according to claim 13, wherein a frequency domain position of the feedback information sent in the third COT is indicated by sidelink control information.

20. The method according to claim 18 or 19, wherein the feedback information sent by the first terminal apparatus in the third COT comprises: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

21. A communication method, comprising:

sending, by a second terminal apparatus, first data to a first terminal apparatus;
determining, by the second terminal apparatus, a physical sidelink feedback channel PSFCH resource associated with the first data; and
if the PSFCH resource belongs to a first channel occupancy time COT in time domain, receiving, by the second terminal apparatus, feedback information corresponding to the first data on the PSFCH resource, wherein the first COT is initiated by the first terminal apparatus; or
if the PSFCH resource does not belong to the first COT in time domain, receiving, by the second terminal apparatus, the feedback information of the first data in a second COT or a third COT, wherein the second COT is a COT initiated by the second terminal apparatus, and the third COT is a COT initiated by the first terminal apparatus.

22. The method according to claim 21, further comprising:
sending, by the second terminal apparatus, indication information to the first terminal apparatus in the second COT, wherein the indication information indicates the first terminal apparatus to send the feedback information on a second time-frequency resource in a time-frequency resource set in the second COT.

23. The method according to claim 22, wherein the time-frequency resource set comprises M resource blocks, the M resource blocks are determined based on a second bitmap, and/or a first frequency domain offset value, and/or a second frequency domain offset value, the second bitmap is configured by a network side, preconfigured, or specified according to a protocol, and the time-frequency resource set comprises a resource corresponding to a bit whose bit value is 1 in the second bitmap and that corresponds to the PSFCH resource.

24. The method according to claim 22, wherein a frequency domain resource position of the second time-frequency resource is indicated by using an order, indicated in the indication information, of the first terminal apparatus in feeding back corresponding feedback information; or
a time domain resource position of the second time-frequency resource is indicated by using a position of a feedback time unit and/or a time offset that are/is indicated in the indication information.

25. The method according to claim 24, wherein the order of the first terminal apparatus in feeding back the corresponding feedback information is indicated by using one or more represented by an indication field in the indication information, a hybrid automatic repeat request process identifier associated with a physical sidelink shared channel PSSCH, a new data indicator associated with the PSSCH, source device information associated with the PSSCH, destination device information associated with the PSSCH, or group identifier information associated with the PSSCH.

26. The method according to claim 25, wherein when the first data corresponds to a second multicast type, a frequency domain resource position corresponding to the first terminal apparatus is related to a first identifier that is preconfigured for each terminal apparatus and that is used for transmission of the PSSCH, or is indicated based on a combination of the first identifier and a source address identifier carried in control information.

27. The method according to claim 24, further comprising:
indicating the frequency domain resource position by using a bit value that is indicated in the indication information and that is used to send the feedback information across feedback time units.

28. The method according to claim 23, wherein the feedback information received in the third COT is in sidelink control information, a media access control control element, or a physical sidelink shared channel PSSCH.

29. The method according to claim 23, wherein the feedback information received in the third COT is on a channel, and a frequency domain position of the feedback information is indicated by sidelink control information.

30. The method according to claim 28 or 29, wherein the feedback information received by the second terminal apparatus in the third COT comprises: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

31. The method according to claim 21, wherein when occupying all frequency domain resources or occupying frequency domain resources that exceed a preset threshold in a resource block set, the second terminal apparatus indicates the PSFCH resource set in the first COT or the third COT, wherein the PSFCH resource set is used by the first terminal apparatus or another terminal apparatus other than the first terminal apparatus to send feedback information.

32. A communication apparatus, comprising:

a processing unit, configured to determine a common feedback resource;
a receiving unit, configured to receive first data from a second terminal apparatus on a first time-frequency resource, wherein
the processing unit is further configured to determine a first feedback resource corresponding to the first time-frequency resource, wherein the first feedback resource belongs to the common feedback resource; and
a sending unit, configured to send a first signal on the first feedback resource.

33. The apparatus according to claim 32, wherein when the first data corresponds to a unicast type, the sending unit is further configured to:
send feedback information on a second feedback resource corresponding to the first time-frequency resource, wherein the feedback information is an acknowledgment or a negative acknowledgment corresponding to the first data, and the second feedback resource does not belong to the common feedback resource.

34. The apparatus according to claim 32, wherein when the first data corresponds to a second multicast type, the sending unit is further configured to:
send feedback information on a second feedback resource corresponding to the first time-frequency resource, wherein the feedback information is an acknowledgment or a negative acknowledgment for the first data, and the second feedback resource does not belong to the common feedback resource.

35. The apparatus according to claim 32, wherein when the first data corresponds to a first multicast type, and hybrid automatic repeat request confirmation information corresponding to the first data is a negative acknowledgment, the sending unit is further configured to:
send feedback information on a second feedback resource corresponding to the first time-frequency resource, wherein the feedback information is a negative acknowledgment for the first data.

36. The apparatus according to any one of claims 32 to 35, wherein the first signal is the feedback information or another signal other than the feedback information.

37. The apparatus according to claim 32, wherein the common feedback resource is used by the first terminal apparatus and another terminal apparatus other than the first terminal apparatus to send a signal.

38. The apparatus according to claim 32, wherein a resource block in the common feedback resources is related to a first bitmap.

39. The apparatus according to claim 38, wherein a bit whose bit value is 1 in the first bitmap corresponds to a resource block in the common feedback resource.

40. The apparatus according to claim 39, wherein a quantity of bits that are indicated in the first bitmap and that are used to send the feedback information is greater than a preset value.

41. The apparatus according to any one of claims 33 to 35, wherein the first feedback resource and the first time-frequency resource belong to a same resource block set, and/or the first feedback resource and the second feedback resource belong to a same resource block set.

42. A communication apparatus, comprising:

a receiving unit, configured to receive first data from a second terminal apparatus; and
a processing unit, configured to determine a physical sidelink feedback channel PSFCH resource associated with the first data, wherein
if the PSFCH resource belongs to a first channel occupancy time COT in time domain, the apparatus further comprises a sending unit, configured to: send feedback information corresponding to the first data to the second terminal apparatus on the PSFCH resource, wherein the first COT is initiated by the first terminal apparatus; or if the PSFCH resource does not belong to the first COT in time domain, the sending unit is configured to send the feedback information of the first data in a second COT or a third COT, wherein the second COT is a COT initiated by the second terminal apparatus, and the third COT is a COT initiated by the first terminal apparatus.

43. The apparatus according to claim 42, further comprising a receiving unit, configured to:
receive indication information sent by the second terminal apparatus in the second COT, wherein the indication information indicates the first terminal apparatus to send the feedback information on a second time-frequency resource in a time-frequency resource set in the second COT.

44. The apparatus according to claim 43, wherein the time-frequency resource set comprises M resource blocks, the M resource blocks are determined based on a second bitmap, and/or a first frequency domain offset value, and/or a second frequency domain offset value, the second bitmap is configured by a network side, preconfigured, or specified according to a protocol, and the time-frequency resource set comprises a resource corresponding to a bit whose bit value is 1 in the second bitmap and that corresponds to the PSFCH resource.

45. The apparatus according to claim 43, wherein a frequency domain resource position of the second time-frequency resource is determined based on an order, indicated in the indication information, of the first terminal apparatus in feeding back corresponding feedback information; or
a time domain resource position of the second time-frequency resource is determined based on a position of a feedback time unit and/or a time offset that are/is indicated in the indication information.

46. The apparatus according to claim 45, wherein the processing unit is further configured to: determine the order of the first terminal apparatus in feeding back the corresponding feedback information based on one or more represented by an indication field in the indication information, a hybrid automatic repeat request process identifier associated with a physical sidelink shared channel PSSCH, a new data indicator associated with the PSSCH, source device information associated with the PSSCH, destination device information associated with the PSSCH, or group identifier information associated with the PSSCH.

47. The apparatus according to claim 46, wherein when the first data corresponds to a second multicast type, a frequency domain resource position corresponding to the first terminal apparatus is related to a first identifier that is preconfigured for each terminal apparatus and that is used for transmission of the PSSCH, or is determined based on a combination of the first identifier and a source address identifier in control information.

48. The apparatus according to claim 45, wherein the processing unit is further configured to:
determine the frequency domain resource position based on a bit value that is indicated in the indication information and that is used to send the feedback information across feedback time units.

49. The apparatus according to claim 44, wherein the feedback information sent in the third COT is in sidelink control information, a media access control control element, or a physical sidelink shared channel PSSCH.

50. The apparatus according to claim 44, wherein a frequency domain position of the feedback information sent in the third COT is indicated by sidelink control information.

51. The apparatus according to claim 49 or 50, wherein the feedback information sent by the first terminal apparatus in the third COT comprises: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

52. A communication apparatus, comprising:

a sending unit, configured to send first data to a first terminal apparatus; and
a processing unit, configured to determine a physical sidelink feedback channel PSFCH resource associated with the first data, wherein
if the PSFCH resource belongs to a first channel occupancy time COT in time domain, the apparatus further comprises a receiving unit, configured to receive feedback information corresponding to the first data on the PSFCH resource, wherein the first COT is initiated by the first terminal apparatus; or
if the PSFCH resource does not belong to the first COT in time domain, the receiving unit is configured to receive the feedback information of the first data in a second COT or a third COT, wherein the second COT is a COT initiated by the second terminal apparatus, and the third COT is a COT initiated by the first terminal apparatus.

53. The apparatus according to claim 52, wherein the sending unit is further configured to:
send indication information to the first terminal apparatus in the second COT, wherein the indication information indicates the first terminal apparatus to send the feedback information on a second time-frequency resource in a time-frequency resource set in the second COT.

54. The apparatus according to claim 53, wherein the time-frequency resource set comprises M resource blocks, the M resource blocks are determined based on a second bitmap, and/or a first frequency domain offset value, and/or a second frequency domain offset value, the second bitmap is configured by a network side, preconfigured, or specified according to a protocol, and the time-frequency resource set comprises a resource corresponding to a bit whose bit value is 1 in the second bitmap and that corresponds to the PSFCH resource.

55. The apparatus according to claim 53, wherein a frequency domain resource position of the second time-frequency resource is indicated by using an order, indicated in the indication information, of the first terminal apparatus in feeding back corresponding feedback information; or
a time domain resource position of the second time-frequency resource is indicated by using a position of a feedback time unit and/or a time offset that are/is indicated in the indication information.

56. The apparatus according to claim 55, wherein the order of the first terminal apparatus in feeding back the corresponding feedback information is indicated by using one or more represented by an indication field in the indication information, a hybrid automatic repeat request process identifier associated with a physical sidelink shared channel PSSCH, a new data indicator associated with the PSSCH, source device information associated with the PSSCH, destination device information associated with the PSSCH, or group identifier information associated with the PSSCH.

57. The apparatus according to claim 56, wherein when the first data corresponds to a second multicast type, a frequency domain resource position corresponding to the first terminal apparatus is related to a first identifier that is preconfigured for each terminal apparatus and that is used for transmission of the PSSCH, or is indicated based on a combination of the first identifier and a source address identifier carried in control information.

58. The apparatus according to claim 55, further comprising:
indicating the frequency domain resource position by using a bit value that is indicated in the indication information and that is used to send the feedback information across feedback time units.

59. The apparatus according to claim 54, wherein the feedback information received in the third COT is in sidelink control information, a media access control control element, or a physical sidelink shared channel PSSCH.

60. The apparatus according to claim 54, wherein the feedback information received in the third COT is on a channel, and a frequency domain position of the feedback information is indicated by sidelink control information.

61. The apparatus according to claim 59 or 60, wherein the feedback information received in the third COT comprises: a hybrid automatic repeat request process identifier associated with the PSSCH, a new data indicator associated with the PSSCH, source device information associated with the PSSCH, destination device information associated with the PSSCH, or group identifier information associated with the PSSCH and an acknowledgment or a negative acknowledgment associated with the PSSCH.

62. The apparatus according to claim 52, wherein when occupying all frequency domain resources or occupying frequency domain resources that exceed a preset threshold in a resource block set, the processing unit is further configured to indicate the PSFCH resource set in the first COT or the third COT, wherein the PSFCH resource set is used by the first terminal apparatus or another terminal apparatus other than the first terminal apparatus to send feedback information.

63. A communication apparatus, comprising a processor and a memory storing instructions, wherein when the instructions are executed by the processor, the electronic device is enabled to perform the method according to any one of claims 1 to 10, any one of claims 11 to 20, or any one of claims 21 to 31.

64. A computer-readable storage medium, wherein the computer-readable storage medium stores instructions, and when the instructions are executed by an electronic device, the electronic device is enabled to perform the method according to any one of claims 1 to 10, any one of claims 11 to 20, or any one of claims 21 to 31.

65. A computer program product, wherein the computer program product comprises instructions, and when the instructions are executed by an electronic device, the electronic device is enabled to perform the method according to any one of claims 1 to 10, any one of claims 11 to 20, or any one of claims 21 to 31.

FIG. 1A

FIG. 1B

FIG. 1C

FIG. 1D

200

110
First terminal apparatus

120
Second terminal apparatus

210
Determine a common feedback resource

220

205 First data

230

240
Determine a first feedback resource corresponding to a first time-frequency resource, where the first feedback resource belongs to the common feedback resource

250
Send a first signal on the first feedback resource

FIG. 2

RB #n

RB #m

Common
feedback
resource

RB #q

RB

FIG. 2A

Frequency                    COT

X  COT
   loss

PSSCH transmission
without HARQ-ACK        Periodically configured        Time
feedback                PSFCH resource

FIG. 3

Resource pool

RB

UE 2

RB set  0

UE 1->UE 2

Guard
band

...

RB

RB set 1

Dedicated PSFCH resource

Common PSFCH resource

FIG. 4

Resource pool

RB set 0

Guard
band

RB set 1

UE 1->UE 2

UE 1->UE 2

UE 1->UE 2

...

UE 1->UE 2

UE 2

RB — Interlace #0

Interlace #0

Interlace #0

...

Interlace #0

RB — Interlace #0

Interlace #0

Interlace #0

...

Interlace #0

Dedicated PSFCH resource

Common PSFCH resource

FIG. 5

FIG. 6

Interlace #1, RB #1

Interlace #1, RB #11

Interlace #1, RB #91

RB

FIG. 7

Bitmap for common
PSFCH   PSFCH resources

1
0
1
0
1
0

⋮

1
0
0
0
0
0

Slot

FIG. 8

A PSFCH
periodicity is 1

A PSFCH
periodicity is 2

Resource
pool

A PSFCH
periodicity is 4

One SL transmission slot

PSSCH    PSFCH    GAP

FIG. 9

EP 4 572 476 A1

| | 0 | 1 | 2 | ... | 11 | 12 | 13 | Bitmap |
|---|---|---|---|---|---|---|---|---|
| PRB 0 | | | | | | | | 1 |
| 1 | | | | | | | | 1 |
| 2 | | | | | | | | 1 |
| 3 | | | | | | | | 1 |
| 4 | | | | | | | | 0 |
| 5 | | | | | | | | 0 |
| 6 | | | | | | | | 0 |
| 7 | | | | | | | | 0 |
| 8 | | | | | | | | 0 |
| 9 | | | | | | | | 0 |
| 10 | | | | | | | | 1 |
| 11 | | | | | | | | 1 |
| 12 | | | | | | | | 1 |
| 13 | | | | | | | | 1 |
| 14 | | | | | | | | 0 |
| 15 | | | | | | | | 0 |
| 16 | | | | | | | | 0 |
| 17 | | | | | | | | 0 |
| 18 | | | | | | | | 0 |
| 19 | | | | | | | | 0 |
| 20 | | | | | | | | 1 |
| 21 | | | | | | | | 1 |
| 22 | | | | | | | | 1 |
| 23 | | | | | | | | 1 |
| 24 | | | | | | | | 0 |
| 25 | | | | | | | | 0 |
| 26 | | | | | | | | 0 |
| 27 | | | | | | | | 0 |
| 28 | | | | | | | | 0 |
| 29 | | | | | | | | 0 |

PSFCH resource

FIG. 10

K = 2

Resource pool

| 0 | 1 | 2 | 3 | | 4 | 5 | 6 | 6 | |

One SL transmission slot

PSSCH bundling window length

PSSCH  PSFCH

FIG. 11

FIG. 12

COT

PSFCH

UE 1 PSCCH/PSSCH

UE 2 PSCCH/PSSCH

UE 3 PSCCH/PSSCH

PSFCH to UE 1

...

PSFCH to UE 2

All UEs perform
transmission on a
common PSFCH
interlace

PSFCH to UE 3

FIG. 13

1400

110

First terminal
apparatus

120

Second terminal
apparatus

1410

1405 First data

1420

1430

Determine a physical sidelink
feedback channel PSFCH resource
associated with the first data

1440

Determine a physical sidelink
feedback channel PSFCH resource
associated with the first data

1450

1415 Feedback information of the first data

1460

FIG. 14

COT #1   COT #2 initiated by inter-RAT UE

PSSCH   PSSCH   ...   PSSCH UE 1-> UE 2   PSSCH UE 1-> UE 2

PSFCH

FIG. 15

EP 4 572 476 A1

Are a PSSCH and a
PSFCH in a same COT?

No

Yes

Dynamic
feedback

(Semi-)static
feedback

TX UE initiates a
COT

RX UE initiates a
COT

The TX UE explicitly
or implicitly indicates
a position for HARQ
feedback for specific
RX UE

The RX UE sends, in
the COT, HARQ
information not fed
back previously

RX (TX) UE sends
(receives) HARQ
feedback on a specified
PSFCH resource
according to a
(pre)configured position
and a one-to-to mapping
relationship in R16/R17

The RX (TX) UE
sends (receives)
HARQ feedback
information in a
specific position
according to COT
indication
information

FIG. 16

Fields that need to be included in a COT indication

| Time offset, if present | Frequency offset 1 | Frequency offset 2, if present | PSSCH-related field | Bitmap for cross-COT HARQ, if present |
|---|---|---|---|---|
| PSFCH slot position = $1^{st}$ slot of a COT + time offset | A start position of a PRB for HARQ feedback of a group 1: for example, the group 1 indicates service types of a non-multicast type 2, that is, a unicast type and a multicast type 1, where feedback for either of the two types requires only one PRB resource | A start position of a PRB for HARQ feedback of a group 2: for example, the group 2 indicates a service type of a multicast type 2, and PRB resources need to be allocated to multiple users of the multicast, where the PRB resources may be allocated in an order based MID values | The PSSCH-related field includes a HARQ process ID, an NDI, a source ID, a destination ID, and the like of a previous PSSCH Related information of a PSSCH 1 Related information of a PSSCH 2 Related information of a PSSCH 3 | PRB resource for cross-slot feedback, where for example, a PRB corresponding to a bit value "1" in the bitmap is used for cross-slot HARQ feedback |

FIG. 17

COT #1

COT #2 initiated by UE 1

| PSSCH | PSSCH | PSSCH | PSSCH | ▮ | ... | ▮ | ... |

| PSSCH 1 UE 1->UE 2 | PSSCH 2 UE 1->UE 3 | ... |

Slot n    Slot n+1

| PSSCH | PSSCH | | PSSCH | PSSCH | ▮ | ... |

Time offset = 1

▮ (Pre)configured PSFCH opportunity

▯ PSFCH opportunity additionally indicated by a COT initiator

EP 4 572 476 A1

| PSSCH 1 UE 1-> UE 2 | PSSCH 2 UE 1-> UE 3 | | | RB 0 |

UE 2  RB 1 ↓ Frequency offset 1 = 1
UE 3  RB 2 ↓ Frequency offset 2 = –1 or 4

...

▨ PSFCH resource

FIG. 18

FIG. 19

PSCCH

Second-stage SCI
including a HARQ-ACK
codebook

PSSCH

FIG. 20

AGC

GAP (gap)

SCI

HARQ
codebook

PSCCH

FIG. 21

Determine a common feedback resource ⌇2210

Receive first data from a second terminal apparatus on a first time-frequency resource ⌇2220

Determine a first feedback resource corresponding to the first time-frequency resource, where the first feedback resource belongs to the common feedback resource ⌇2230

Send a first signal on the first feedback resource ⌇2240

FIG. 22

Receive first data from a second terminal apparatus ⌇2310

Determine a physical sidelink feedback channel PSFCH resource associated with the first data ⌇2320

If the PSFCH resource belongs to a first channel occupancy time COT in time domain, send feedback information corresponding to the first data to the second terminal apparatus on the PSFCH resource, where the first COT is initiated by a first terminal apparatus; or if the PSFCH resource does not belong to the first COT in time domain, send the feedback information of the first data in a second COT or a third COT, where the second COT is a COT initiated by the second terminal apparatus, and the third COT is a COT initiated by the first terminal apparatus. ⌇2330

FIG. 23

Send first data to a first terminal apparatus 2410

Determine a physical sidelink feedback channel PSFCH resource associated with the first data 2420

If the PSFCH resource belongs to a first channel occupancy time COT in time domain, receive feedback information corresponding to the first data on the PSFCH resource, where the first COT is initiated by a first terminal apparatus; or if the PSFCH resource does not belong to the first COT in time domain, receive the feedback information of the first data in a second COT or a third COT, where the second COT is a COT initiated by a second terminal apparatus, and the third COT is a COT initiated by the first terminal apparatus. 2430

FIG. 24

Communication apparatus 2500

Processing unit 2510

Receiving unit 2520

Sending unit 2530

FIG. 25

Communication apparatus 2600

Processor 2610

Interface circuit 2620

Memory 2630

FIG. 26

## INTERNATIONAL SEARCH REPORT

| International application No. |
|---|
| **PCT/CN2023/121081** |

| **A.** | **CLASSIFICATION OF SUBJECT MATTER** |
|---|---|

H04W72/04(2023.01)i; H04L5/00(2006.01)i

According to International Patent Classification (IPC) or to both national classification and IPC

| **B.** | **FIELDS SEARCHED** |
|---|---|

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, WPABSC, ENTXTC, VEN, 3GPP, CJFD, CNKI: 侧链路, 副链路, 侧行, 反馈, 公共反馈信道, 信道占用时间, 信道占用时长, 单播, 组播, 重传, 应答, sidelink, PSFCH, common feedback channel, COT, channel occupancy time, unicast, multicast, HARQ, NACK, ACK, D2D, V2X

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 108631968 A (HUAWEI TECHNOLOGIES CO., LTD.) 09 October 2018 (2018-10-09) description, paragraphs [0132]-[0194] | 1-65 |
| Y | CN 112771962 A (CONVIDA WIRELESS LLC) 07 May 2021 (2021-05-07) description, paragraphs [0261]-[0263] | 1-10, 32-41, 63-65 |
| Y | CN 113517957 A (HUAWEI TECHNOLOGIES CO., LTD.) 19 October 2021 (2021-10-19) description, paragraphs [0092]-[0221] | 11-31, 42-65 |
| A | CN 114830697 A (OPPO GUANGDONG MOBILE TELECOMMUNICATIONS CO., LTD.) 29 July 2022 (2022-07-29) entire document | 1-65 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 December 2023** | **22 December 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121081**

| Patent document cited in search report | | | Publication date (day/month/year) | Patent family member(s) | | | Publication date (day/month/year) |
|---|---|---|---|---|---|---|---|
| CN | 108631968 | A | 09 October 2018 | BR | 112019019560 | A2 | 22 April 2020 |
| | | | | US | 2020015198 | A1 | 09 January 2020 |
| | | | | US | 11330561 | B2 | 10 May 2022 |
| | | | | US | 2022295453 | A1 | 15 September 2022 |
| | | | | WO | 2018171563 | A1 | 27 September 2018 |
| | | | | EP | 3588829 | A1 | 01 January 2020 |
| | | | | EP | 3588829 | A4 | 04 March 2020 |
| CN | 112771962 | A | 07 May 2021 | JP | 2022502934 | A | 11 January 2022 |
| | | | | WO | 2020068252 | A1 | 02 April 2020 |
| | | | | US | 2022007403 | A1 | 06 January 2022 |
| | | | | EP | 3858024 | A1 | 04 August 2021 |
| | | | | KR | 20210064343 | A | 02 June 2021 |
| CN | 113517957 | A | 19 October 2021 | WO | 2021204218 | A1 | 14 October 2021 |
| | | | | CA | 3173958 | A1 | 14 October 2021 |
| | | | | EP | 4120606 | A1 | 18 January 2023 |
| | | | | US | 2023014182 | A1 | 19 January 2023 |
| CN | 114830697 | A | 29 July 2022 | WO | 2021134798 | A1 | 08 July 2021 |
| | | | | US | 2022330241 | A1 | 13 October 2022 |
| | | | | EP | 4087291 | A1 | 09 November 2022 |
| | | | | EP | 4087291 | A4 | 21 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202211216324X